(19) Europäisches Patentamt
European Patent Office
Office européen des brevets

(11) **EP 4 756 638 A1**

(12) **EUROPEAN PATENT APPLICATION**

(43) Date of publication:
**10.06.2026 Bulletin 2026/24**

(21) Application number: **25210873.3**

(22) Date of filing: **23.10.2025**

(51) International Patent Classification (IPC):
***G06F 16/2453*** (2019.01)

(52) Cooperative Patent Classification (CPC):
**G06F 16/24542**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **03.12.2024 US 202418967068**

(71) Applicant: **SAP SE
69190 Walldorf (DE)**

(72) Inventors:
• **CHOI, Dalsu
69190 Walldorf (DE)**
• **SHIN, Heesik
69190 Walldorf (DE)**

(74) Representative: **Müller-Boré & Partner
Patentanwälte PartG mbB
Friedenheimer Brücke 21
80639 München (DE)**

(54) **SELECTIVE RULE APPLICATION DURING QUERY OPTIMIZATION**

(57) Techniques and systems are disclosed for evaluating and optimizing logical plans using machine learning. In an aspect, a logical plan is received and submitted to a machine learning model, which predicts whether applying a rule to the logical plan provides a benefit, such as reduced execution time or resource use. Based on the prediction, the rule is applied or marked for application, or not applied or not marked for application. Training operations for the machine learning model include calculating and comparing execution costs of applying or not applying a rule, generating a numerical representation of the logical plan, and assigning labels based on cost differences. A machine learning model trained with the representations and labels predicts rule benefits for logical plans, including both new logical plans and those used during training.

FIG. 1

## Description

### FIELD

The present disclosure generally relates to query optimization. Particular implementations relate to evaluating whether a rule may provide a benefit prior to applying the rule during query optimization.

### BACKGROUND

Modern database systems frequently process vast amounts of data. Queries in such systems can access a multitude of tables and views, each with numerous attributes. Enterprise-level software applications often employ queries involving hundreds of tables, some of which might have hundreds of attributes. These queries can encompass a wide range of operations, including diverse join operations with varying conditions, and other tasks such as grouping and ordering.

When a query is presented to a database system, components like a query optimizer generate computer-executable commands for the operations specified in the query. This optimizer analyzes the query to identify efficient execution paths. It may choose specific data access methods or even consider rewriting segments of the query for better performance.

Query optimizers employ various techniques, including rule-based and cost-based methods. However, as a query plan becomes more complex, the number of potential plans (and their variations) that an optimizer might consider - referred to as the search space - expands nearly exponentially. Often, due to time and computational constraints, the optimizer cannot evaluate every potential plan within this space.

Typically, query processing includes receiving a query, generating a logical plan for the query, and then applying various rules to rewrite the logical plan into a form that is anticipated to be more efficient. However, applying the rules can be very time-consuming and resource-intensive, particularly when a query optimizer might analyze a hundred or more different rules. While in many cases, the rules may provide substantial benefits, and at least particularly justify the time and expense of applying the rules, in other cases the benefit may be nonexistent or comparatively minor. Occasionally, applying a rewrite rule may result in performance regression compared to the original query plan. Accordingly, room for improvement exists.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

Techniques and systems are disclosed for evaluating and optimizing logical plans using machine learning. In an aspect, a logical plan is received and submitted to a machine learning model, which predicts whether applying a rule to the logical plan provides a benefit, such as reduced execution time or resource use. Based on the prediction, the rule is applied or marked for application, or not applied or not marked for application. Training operations for the machine learning model include calculating and comparing execution costs of applying or not applying a rule, generating a numerical representation of the logical plan, and assigning labels based on cost differences. A machine learning model trained with the representations and labels predicts rule benefits for logical plans, including both new logical plans and those used during training.

In one aspect, the present disclosure provides a process of receiving and processing a logical plan using a machine learning model. A logical plan for a query is received. A representation of the logical plan for the query is submitted to a machine learning model to obtain a result comprising a prediction of whether applying a rule to the logical plan will provide a benefit, such as reduced query execution time or computing resource use. Based on determining that the prediction indicates applying the rule will provide a benefit, the rule is applied to the logical plan or marked as to be applied to the logical plan.

In another aspect, the present disclosure provides a process of performing training operations on logical plans and rules. For respective logical plans of a plurality of logical plans, training operations are performed, at least a portion of the logical plans differing from one another. A first cost of executing the logical plan without applying a rule of a set of rules to the logical plan is calculated. A second cost of executing the logical plan having the rule applied to the logical plan is calculated. A difference between the first cost and the second cost is calculated. When the difference satisfies a threshold, a label is assigned indicating that applying the rule provides a benefit, and otherwise a label is assigned indicating that applying the rule does not provide a benefit. A numerical representation of the logical plan is generated. The machine learning model is trained with the numerical representation and the label.

In a further aspect, the present disclosure provides a process of training a machine learning model and using it to process logical plans. For respective logical plans of a plurality of logical plans, training operations are performed, at least a portion of the logical plans differing from one another. A first cost of executing the logical plan without applying a rule of a set of rules to the logical plan is calculated. A second cost of executing the logical plan having the rule applied to the logical plan is calculated. A difference between the first cost and the second cost is calculated. When the difference satisfies a threshold, a label is assigned indicating that applying the rule provides a benefit, and otherwise a label is assigned indicating that applying the rule does not provide a benefit. A numerical representation of the logical plan is generated. The machine learning model is trained with the numerical representation and the label.

A logical plan for a query is received. A representation of the logical plan for the query is submitted to the machine learning model to obtain a result comprising a prediction of whether applying a rule to the logical plan will provide a benefit, such as reduced query execution time or computing resource use. Based on determining that the prediction indicates applying the rule will provide a benefit, the rule is applied to the logical plan, or the rule is marked as to be applied to the logical plan.

The present disclosure also includes computing systems and tangible, non-transitory computer readable storage media configured to carry out, or including instructions for carrying out, an above-described method. As described herein, a variety of other features and advantages can be incorporated into the technologies as desired.

## BRIEF DESCRIPTION OF THE DRAWINGS

FIG. 1 is a diagram depicting an example database system which can be used in implementing aspects of disclosed technologies.

FIG. 2 illustrates operations performed in executing a query, including the generation of various types of query plans based on a received query.

FIGS. 3A and 3B illustrate an example query and different types of query plans that can be generated therefrom.

FIG. 4 illustrates a query that is more complex than the query of FIGS. 3A and 3B, and corresponding logical and abstract query plans.

FIG. 5 is a flowchart of a process of training a model that can be used to predict whether applying rewrite rules to a query or query representation will be beneficial.

FIG. 6 illustrates how a short-term benefit of applying a rule to a logical plan for a query during query optimization can be performed.

FIG. 7 illustrates how a long-term benefit of applying a rule to a logical plan for a query during query optimization can be performed.

FIG. 8 is a flowchart of a process for evaluating rules for application to a logical plan for a query.

FIG. 9 is a flowchart of a process for evaluating rules for application to a logical plan for a query, where inference results include results for multiple rules.

FIG. 10 is a flowchart of a process for evaluating rules for application to a logical plan for a query, where an additional check is performed prior to not applying a rule, if a prediction is that the rule will not provide a benefit when applied to a logical plan.

FIG. 11 is a flowchart of a process for evaluating rules for application to a logical plan for a query, where an initial check determines whether the logical plan, or the query, was used in training a model used for the evaluation.

FIG. 12 is a flowchart of a process for evaluating rules for application to a logical plan for a query, where at least one rule has a rule-specific prediction model.

FIG. 13 is a diagram of an example computing environment in which disclosed techniques can be implemented.

FIG. 14A is a flowchart of a process of receiving and processing a logical plan using a machine learning model.

FIG. 14B is a flowchart of a process of performing training operations on logical plans and rules.

FIG. 14C is a flowchart of a process of training a machine learning model and using it to process logical plans.

FIG. 15 is a diagram of an example computing system in which some described embodiments can be implemented.

FIG. 16 is an example cloud computing environment that can be used in conjunction with the technologies described herein.

## DETAILED DESCRIPTION

### Example 1 - Overview

Modern database systems frequently process vast amounts of data. Queries in such systems can access a multitude of tables and views, each with numerous attributes. Enterprise-level software applications often employ queries involving hundreds of tables, some of which might have hundreds of attributes. These queries can encompass a wide range of operations, including diverse join operations with varying conditions, and other tasks such as grouping and ordering.

When a query is presented to a database system, components like a query optimizer generate computer-executable commands for the operations specified in the query. This optimizer analyzes the query to identify efficient execution paths. It may choose specific data access methods or even consider rewriting segments of the query for better performance.

Query optimizers employ various techniques, including rule-based and cost-based methods. However, as a query plan becomes more complex, the number of potential plans (and their variations) that an optimizer might consider - referred to as the search space - expands nearly exponentially. Often, due to time and computational constraints, the optimizer cannot evaluate every potential plan within this space.

Typically, query processing includes receiving a query, generating a logical plan for the query, and then applying various rules to rewrite the logical plan into a form that is anticipated to be more efficient. However, applying the rules can be very time-consuming and resource-intensive, particularly when a query optimizer might analyze a hundred or more different rules. While in many cases, the rules may provide substantial benefits, and justify the time and expense of applying the rules, in other cases the benefit may be nonexistent or comparatively minor. Occasionally, applying a rewrite rule may result in performance regression compared to the original query plan. Accordingly, room for improvement exists.

The present disclosure provides innovations that check whether logical plan rewrite rules will produce a desired level of logical plan improvement (such as reduced execution time or execution resource use) for an input query. If a rule does not provide a sufficient improvement, it is not applied. Not applying rules leads to more efficient query optimization, since applying rules, particularly to complex queries, can be time-consuming and computational resource-intensive. That is, for example, it may be desirable to reduce query optimization time and resource use by skipping rules that may provide no or limited benefit, or which could even be less performant than if the rule were skipped. So, in some cases, a threshold can be set so that rules are applied if they provide any benefit, while in other cases a threshold can be set so that rules will be applied as long as some higher degree of benefit is expected to be provided.

Generally, disclosed techniques submit a query, or a representation of a query, to a trained model, such as a neural network, to determine whether one or more rewrite rules should be applied. Depending on implementation, a prediction for a set of multiple relevant rules can be obtained by one invocation of the model. Alternatively, separate predictions can be obtained for each rule of a set of rules.

Typically, a query or representation of the query is converted to a numerical representation. This can be performed using a variety of techniques, including tree convolution, semantic vector embeddings, or one-hot vectors that convert query terms to a vector representation. For a variety of reasons, it can be beneficial to encode a representation of the query, rather than the query itself, for submission to different machine learning components, such as fully connected layers, to determine if applying a rule is likely to provide a benefit. In particular, it can be useful to generate a logical plan for the query, such as because the logical plan is what a query optimizer typically receives as input and attempts to optimize using various query rewrite rules. Tree convolution can be applied to the logical plan to provide an input, such as for the fully connected layers. That is, tree convolution provides a mathematical representation of the query plan suitable for being processed by a machine learning model.

During training, labels can be provided along with the query plan or query plan representation, such as indicators of whether one or more rules applied to the query plan or representation provided a benefit during query optimization. In some cases, the model can be trained using, and predictions obtained for, multiple rules in a single request. In other cases, training and prediction can be performed on a rule-by-rule basis.

A cost estimating model can be used to determine whether rules provide a benefit when applied to a particular query or query representation. A cost associated with a query or query representation can be compared with a cost associated with that query or query representation with the application of one or more rules. During training, this information can be used to label the training data.

Benefits from applying a particular rule can be measured in at least two ways. One way is to calculate the "short-term" benefit, which considers the rule in isolation. A "long-term" benefit can also be calculated. A long-term benefit considers the effect of applying, or not applying, a rule in conjunction with other rules that would be applied. That is, applying a rule may or may not result in an immediate cost savings. However, applying the rule may result in a subsequent rule providing increased cost savings. In assigning labels to training data, both short-term and long-term benefits can be considered, including weighting them to different degrees.

In some cases, a single model can be used to predict whether rules in a set of rules should be applied. In other implementations, multiple models can be used, where at least some models are refined for particular rules. A model can be trained based on data for multiple rules. That model can then be fine-tuned to produce different refined models for the multiple rules.

In the case where a rule is determined not to be beneficial during the inference stage, additional checks can be implemented to confirm that the rule should not be applied. Typically, a query optimizer seeks to apply all available rules, assuming they will be beneficial. Disclosed techniques allow for variation from this approach. However, it is often desired to avoid performance regression, in which case a process can be configured to determine whether a query or query representation being processed corresponds to one in the training data set. If so, the rule is not applied. If the query or query being processed was not in the training data set, there may be less confidence that applying the rule will not be beneficial, and so the rule is applied even though a prediction indicates that the rule is not beneficial. This type of check can be performed in other manners. For example, prior to evaluating rules, a query or query representation can be compared with the training data set. If the query or query representation matches one in the training data set, the processes of the present disclosure can proceed to make predictions regarding whether one or more rules should be applied. If the query or query representation is not in the training data set, the process can default to another approach, such as where all rules are applied.

Thus, the present disclosure can improve query optimization by skipping certain optimization rules, such as by reducing query optimization time and computer resource use. Disclosed techniques are typically performed on a real-time basis, such as where query optimization is performed in less than ten minutes, such as less than five minutes, or less than one minute. The queries can have many operations, such as at least 25, 50, or 100 operations. As mentioned, a substantial number of rules are typically available to be analyzed, such at least 50, 100, or 200 applications.

**Example 2 - Example Database Architecture**

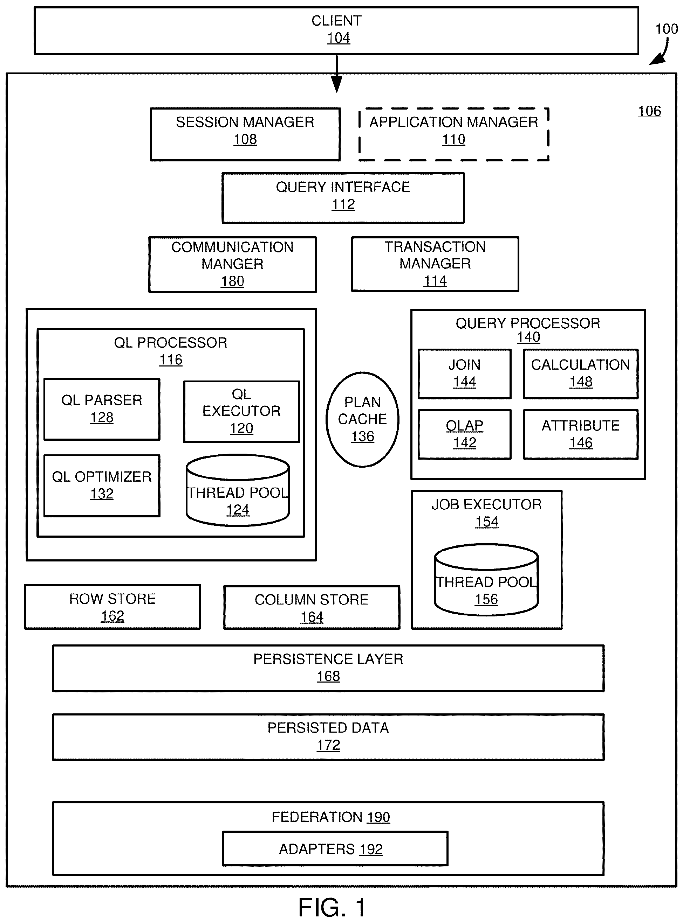

FIG. 1 illustrates an example database environment 100. The database environment 100 can include a client 104. Although a single client 104 is shown, the client 104 can represent multiple clients. The client or clients 104 may be OLAP clients, OLTP clients, or a combination thereof.

The client 104 is in communication with a database server 106. Through various subcomponents, the database server 106 can process requests for database operations, such as requests to store, read, or manipulate data (*i.e.,* CRUD operations). A session manager component 108 can be responsible for managing connections between the client 104 and the database server 106, such as clients communicating with the database server using a database programming interface, such as Java Database Connectivity (JDBC), Open Database Connectivity (ODBC), or Database Shared Library (DBSL). Typically, the session manager 108 can simultaneously manage connections with multiple clients 104. The session manager 108 can carry out functions such as creating a new session for a client request, assigning a client request to an existing session, and authenticating access to the database server 106. For each session, the session manager 108 can maintain a context that stores a set of parameters related to the session, such as settings related to committing database transactions or the transaction isolation level (such as statement level isolation or transaction level isolation).

For other types of clients 104, such as web-based clients (such as a client using the HTTP protocol or a similar transport protocol), the client can interface with an application manager component 110. Although shown as a component of the database server 106, in other implementations, the application manager 110 can be located outside of, but in communication with, the database server 106. The application manager 110 can initiate new database sessions with the database server 106, and carry out other functions, in a similar manner to the session manager 108.

The application manager 110 can determine the type of application making a request for a database operation and mediate execution of the request at the database server 106, such as by invoking or executing procedure calls, generating query language statements, or converting data between formats usable by the client 104 and the database server 106. In particular examples, the application manager 110 receives requests for database operations from a client 104, but does not store information, such as state information, related to the requests.

Once a connection is established between the client 104 and the database server 106, including when established through the application manager 110, execution of client requests is usually carried out using a query language, such as the structured query language (SQL). In executing the request, the session manager 108 and application manager 110 may communicate with a query interface 112. The query interface 112 can be responsible for creating connections with appropriate execution components of the database server 106. The query interface 112 can also be responsible for determining whether a request is associated with a previously cached statement or a stored procedure, and calling the stored procedure or associating the previously cached statement with the request.

At least certain types of requests for database operations, such as statements in a query language to write data or manipulate data, can be associated with a transaction context. In at least some implementations, each new session can be assigned to a transaction. Transactions can be managed by a transaction manager component 114. The transaction manager component 114 can be responsible for operations such as coordinating transactions, managing transaction isolation, tracking running and closed transactions, and managing the commit or rollback of transactions. In carrying out these operations, the transaction manager 114 can communicate with other components of the database server 106.

The query interface 112 can communicate with a query language processor 116, such as a structured query language processor. For example, the query interface 112 may forward to the query language processor 116 query language statements or other database operation requests from the client 104. The query language processor 116 can include a query language executor 120, such as a SQL executor, which can include a thread pool 124. Some requests for database operations, or components thereof, can be executed directly by the query language processor 116. Other requests, or components thereof, can be forwarded by the query language processor 116 to another component of the database server 106. For example, transaction control statements (such as commit or rollback operations) can be forwarded by the query language processor 116 to the transaction manager 114.

In at least some cases, the query language processor 116 is responsible for carrying out operations that retrieve or manipulate data (e.g., SELECT, UPDATE, DELETE). Other types of operations, such as queries, can be sent by the query language processor 116 to other components of the database server 106. The query interface 112, and the session manager 108, can maintain and manage context information associated with requests for database operations. In particular implementations, the query interface 112 can maintain and manage context information for requests received through the application manager 110.

When a connection is established between the client 104 and the database server 106 by the session manager 108 or the application manager 110, a client request, such as a query, can be assigned to a thread of the thread pool 124, such as using the query interface 112. In at least one implementation, a thread is associated with a context for executing a processing activity. The thread can be managed by an operating system of the database server 106, or by, or in combination with, another component of the database server. Typically, at any point, the thread pool 124 contains a plurality of threads. In at least some cases, the number of threads in the thread pool 124 can be dynamically adjusted, such as in response to a level of activity at the database server 106. Each thread of the thread pool 124, in particular aspects, can be assigned to a plurality of different sessions.

When a query is received, the session manager 108 or the application manager 110 can determine whether an execution plan for the query already exists, such as in a plan cache 136. If a query execution plan exists, the cached execution plan can be retrieved and forwarded to the query language executor 120, such as using the query interface 112. For example, the query can be sent to an execution thread of the thread pool 124 determined by the session manager 108 or the application manager 110. In a particular example, the query plan is implemented as an abstract data type.

If the query is not associated with an existing execution plan, the query can be parsed using a query language parser 128. The query language parser 128 can, for example, check query language statements of the query to make sure they have correct syntax, and confirm that the statements are otherwise valid. For example, the query language parser 128 can check to see if tables and records recited in the query language statements are defined in the database server 106.

The query can also be optimized using a query language optimizer 132. The query language optimizer 132 can manipulate elements of the query language statement to allow the query to be processed more efficiently. For example, the query language optimizer 132 may perform operations such as unnesting queries or determining an optimized execution order for various operations in the query, such as operations within a statement. The query optimizer 132 can implement disclosed techniques for evaluating potential query optimization actions, such as the application of query rewrite rules, to confirm whether applying an action is likely to provide a benefit compared with not applying the action.

After optimization, an execution plan can be generated, or compiled, for the query. In at least some cases, the execution plan can be cached, such as in the plan cache 136, which can be retrieved (such as by the session manager 108 or the application manager 110) if the query is received again.

Once a query execution plan has been generated or received, the query language executor 120 can oversee the execution of an execution plan for the query. For example, the query language executor 120 can invoke appropriate subcomponents of the database server 106.

In executing the query, the query language executor 120 can call a query processor 140, which can include one or more query processing engines. The query processing engines can include, for example, an OLAP engine 142, a join engine 144, an attribute engine 146, or a calculation engine 148. The OLAP engine 142 can, for example, apply rules to create an optimized execution plan for an OLAP query. The join engine 144 can be used to implement relational operators, typically for non-OLAP queries, such as join and aggregation operations. In a particular implementation, the attribute engine 146 can implement column data structures and access operations. For example, the attribute engine 146 can implement merge functions and query processing functions, such as scanning columns.

In certain situations, such as if the query involves complex or internally parallelized operations or sub-operations, the query executor 120 can send operations or sub-operations of the query to a job executor component 154, which can include a thread pool 156. An execution plan for the query can include a plurality of plan operators. Each job execution thread of the job execution thread pool 156, in a particular implementation, can be assigned to an individual plan operator. The job executor component 154 can be used to execute at least a portion of the operators of the query in parallel. In some cases, plan operators can be further divided and parallelized, such as having operations concurrently access different parts of the same table. Using the job executor component 154 can increase the load on one or more processing units of the database server 106, but can improve execution time of the query.

The query processing engines of the query processor 140 can access data stored in the database server 106. Data can be stored in a row-wise format in a row store 162, or in a column-wise format in a column store 164. In at least some cases, data can be transformed between a row-wise format and a column-wise format. A particular operation carried out by the query processor 140 may access or manipulate data in the row store 162, the column store 164, or, at least for certain types of operations (such as join, merge, and subquery), both the row store 162 and the column store 164. In at least some aspects, the row store 162 and the column store 164 can be maintained in main memory.

A persistence layer 168 can be in communication with the row store 162 and the column store 164. The persistence layer 168 can be responsible for actions such as committing write transactions, storing redo log entries, rolling back transactions, and periodically writing data to storage to provide persisted data 172.

In executing a request for a database operation, such as a query or a transaction, the database server 106 may need to access information stored at another location, such as another database server. The database server 106 may include a communication manager 180 component to manage such communications. The communication manager 180 can also mediate communications between the database server 106 and the client 104 or the application manager 110, when the application manager is located outside of the database server.

In some cases, the database server 106 can be part of a distributed database system that includes multiple database servers. At least a portion of the database servers may include some or all of the components of the database server 106. The database servers of the database system can, in some cases, store multiple copies of data. For example, a table may be replicated at more than one database server. In addition, or alternatively, information in the database system can be distributed between multiple servers. For example, a first database server may hold a copy of a first table and a second database server can hold a copy of a second table. In yet further implementations, information can be partitioned between database servers. For example, a first database server may hold a first portion of a first table and a second database server may hold a second portion of the first table.

In carrying out requests for database operations, the database server 106 may need to access other database servers, or other information sources, within the database system, or at external systems, such as an external system on which a remote data object is located. The communication manager 180 can be used to mediate such communications. For example, the communication manager 180 can receive and route requests for information from components of the database server 106 (or from another database server) and receive and route replies.

The database server 106 can include components to coordinate data processing operations that involve remote data sources. In particular, the database server 106 includes a data federation component 190 that at least in part processes requests to access data maintained at a remote system. In carrying out its functions, the data federation component 190 can include one or more adapters 192, where an adapter can include logic, settings, or connection information usable in communicating with remote systems. Examples of adapters include "connectors" as implemented in technologies available from SAP SE, of Walldorf, Germany. Further, disclosed techniques can use technologies underlying data federation techniques such as Smart Data Access (SDA) and Smart Data Integration (SDI) of SAP SE.

**Example 3 - Example Operations In Processing a Query for Execution**

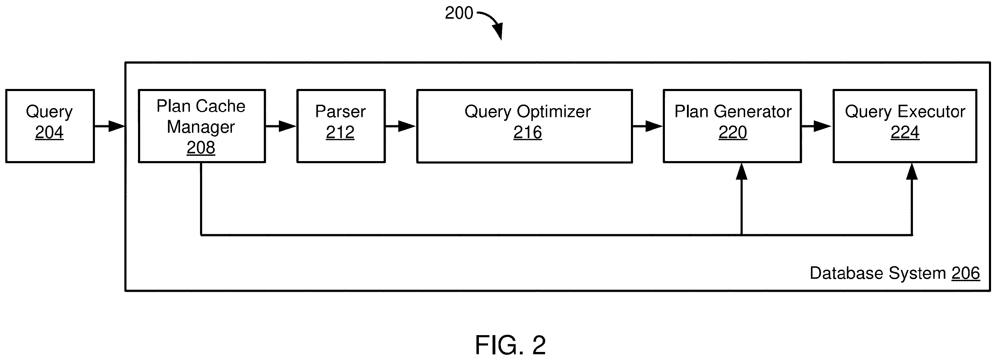

FIG. 2 illustrates an example computing environment 200 in which disclosed techniques can be implemented. At least a portion of the computing environment 200 can be part of a database environment, such as being part of the database server 106 of FIG. 1.

The computing environment 200 illustrates a typical pathway for processing requests for database operations, such as database operations specified in a query 204. The query 204 can be expressed in a suitable query language, such as SQL. The query 204 includes operations such as selecting data from particular database objects, such as tables, as well as operations such as aggregation operations, including determining sums, maximum or minimum values, averages, or counts, and can include grouping or ordering operations.

Components of a database system 206 can be used to process and execute the query 204, as well as to return query results in response to the query. A plan cache manager 208 can determine whether a cached query plan exists for the query 204. For example, the plan cache manager 208 can access the plan cache 136 of FIG. 1. In at least some cases, if the plan cache manager 208 determines that a query plan exists, a cached plan for the query 204 can be sent to a plan generator 220 or a query executor 224, such as depending on whether the cached plan is a logical plan, an abstract query plan, a physical plan, or an execution plan. The plan cache manager 208 can optionally be omitted from the computing environment 200.

If the plan cache manager 208 determines that a cached plan for the query 204 does not exist, or if the cache manager is omitted, the query 204 is parsed by a parser 212, which may have associated query rewrite or transformation functionality. The query 204 can optionally be sent to the parser 212 even if a cached plan exists, such as if the cached plan is older than a certain date or if a flag is set that indicates that an updated query plan should be created or is available for use. Situations where an updated query plan should be created include those where an existing plan has been invalidated, such as resulting from a change in metadata for data objects referenced in the query or a change in the layout of data as stored in the database system 206. The parser 212 can perform operations such as checking that the syntax, structure, and semantics of the query 204 are correct. The parser 212 can also prepare a parse tree or abstract syntax tree. In some scenarios, an abstract syntax tree can be converted to a logical representation of the query 204, such as a logical query plan.

The query optimizer 216 explores alternative strategies to execute the query using the logical query plan or an abstract query plan as a starting point. This logical plan is then optimized by the query optimizer 216, which can access metadata and other relevant information from the abstract query plan during optimization. The query optimizer 216 can take into account, for example, different join orders, potential access paths like indexes, and other algorithmic choices. Depending on the particular implementation of the query optimizer 216, the query optimizer can use heuristics, cost models, and statistical data about the underlying datasets, and evaluate the probable performance of these strategies.

Once the query optimizer 216 determines the most efficient approach, it passes this optimized logical plan to the plan generator 220. The plan generator 220 translates the optimized logical plan into a physical plan, which provides concrete instructions about how a database engine (such as the query processor 140 or the job executor 154, as depicted in FIG. 1) should execute the query. This physical plan incorporates details about specific algorithms to use, data access methods, and other execution specifics. The plan generator 220 can also generate an execution plan, which includes granular details on how data should be accessed and manipulated. The execution plan can include cost estimates for various operations, and a query executor 224 can follow the instructions in the execution plan. The query executor 224 can collect data regarding execution of a query, which can be provided back to the query optimizer 216 to improve later optimizations.

Rule-based optimizers use a predetermined set of rules to optimize queries. Cost-based optimizers evaluate various logical query plans that can be generated from an initial logical query plan and select the one with the lowest estimated cost, usually in terms of I/O, CPU usage, or other factors. Transformation optimizers transform high-level queries into a sequence of low-level physical operations. These transformations might include simplifying the query, removing redundancies, or restructuring the query. Hybrid query optimizers can use multiple of these approaches.

**Example 4 - Example Query and Query Plans Generated Therefrom**

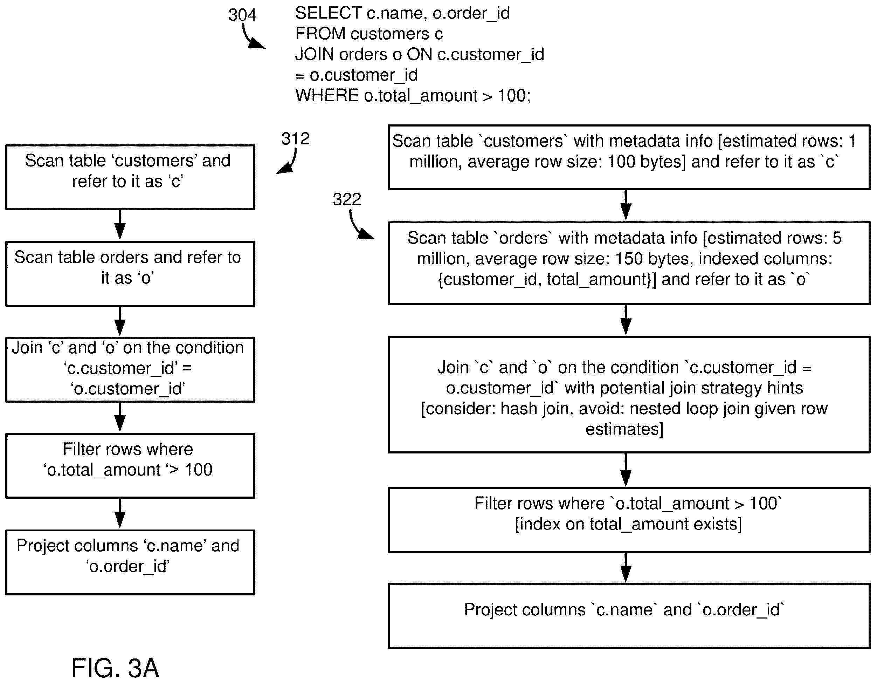

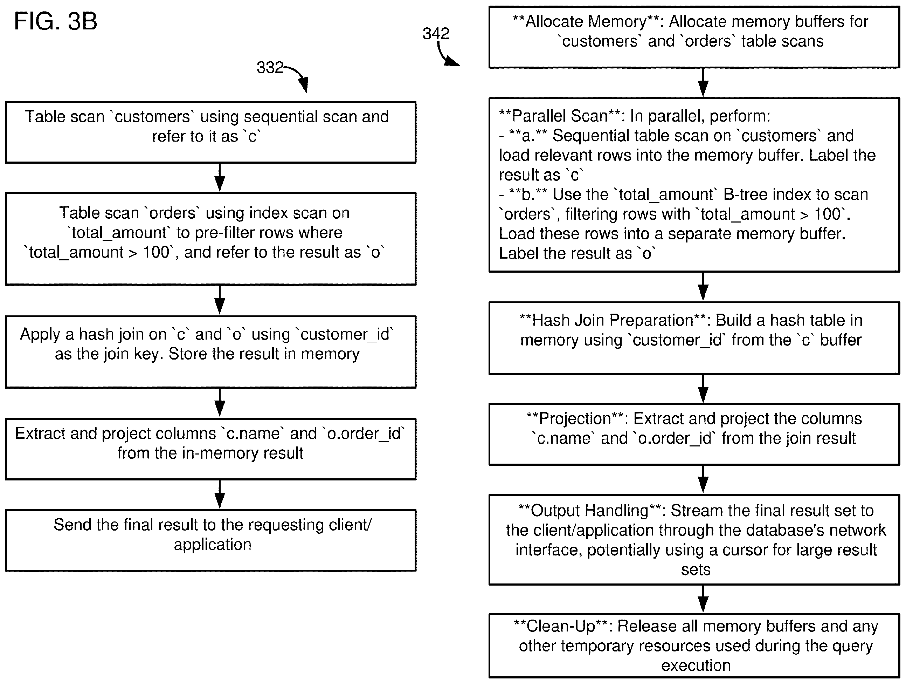

The present disclosure generally describes queries that can be received by a database system and different types of plans that can be created based on a particular query, including logical plans, abstract plans, physical plans, and execution plans. While these terms are known in the art, the following discussions explains how these different types of plans can be used in query processing, including various differences between plan types. The discussion refers to FIGS. 3A and 3B.

FIG. 3A provides a simple illustrative query 304. The query 304 provides a projection of two columns resulting from a join between an orders table and a customer table, with a filter condition that the total amount of an order is greater than 100. A first step in processing the query 304 is to produce a parse tree, such as described for the parser 212 of FIG. 2.

A logical plan, such as the logical plan 312, can be produced from the parse tree, or more particularly from an abstract syntax tree that is produced from the parse tree. A logical plan represents the high-level operations needed to carry out the query, such as joins, filter operations, and aggregation operations. A logical plan summarizes what operations need to occur in executing the query, as opposed to specifying how those operations should be carried out. For instance, for a query joining two tables and selecting certain columns, the logical plan will detail the join and column selection without specifying the method of join or data access.

An abstract query plan (AQP), such as abstract query plan 322, can be generated from the logical plan. In turn, the abstract query plan can be used to generate a logical query plan. An abstract query plan can also be generated directly from a parse tree. The abstract query plan also provides a high-level abstraction of query operations, but, as compared with a logical query plan, is enhanced with additional metadata about the database, including database objects used in the query. An abstract query plan can incorporate placeholders for operations that can be finalized later, such as in a physical query plan after optimization of the logical query plan, and annotations about database objects. These annotations can include information such as the presence of an index on a table involved in a join or statistics about the distribution of values in a column of a data object used in a query.

A physical query plan, such as physical query plan 332 of FIG. 3B, can be generated from a logical query plan or an abstract query plan, typically after the logical query plan has been optimized. The physical query plan includes details about not just what operations should be performed, but how they should be performed. For example, generating the physical query plan can include determining specific algorithms to be used during execution, such as whether to use a hash join or a nested loop join, and access methods, like a full table scan versus an index seek.

An execution plan, such as the execution plan 342, can be generated from the physical query plan. The execution plan can be considered a fine-tuned implementation or adaptation of the physical plan, generated taking into account the specifics of an underlying database system. The execution plan is created using details such as the architecture of a database, system, exact data locations, partitioning techniques, and available computational resources. Execution plans are intended to be executed by a database system, including potentially being pre-compiled into machine code for rapid execution. For the join operation in the query 304, the execution plan would be aware of the precise memory locations of the tables, any existing data partitioning, and might even include executing parts of the join operation concurrently across multiple CPU cores.

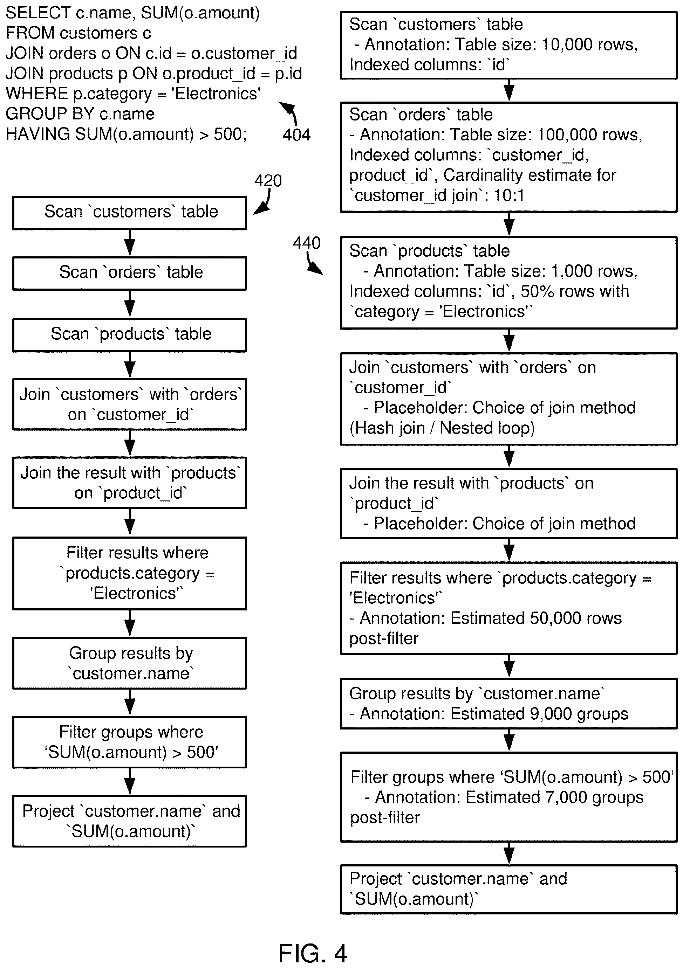

FIG. 4 illustrates a slightly more complex query 404, as well as a logical query plan 420 and an abstract query plan 440 that can be produced from the query 404.

**Example 5 - Example Training of Rule Evaluation Model**

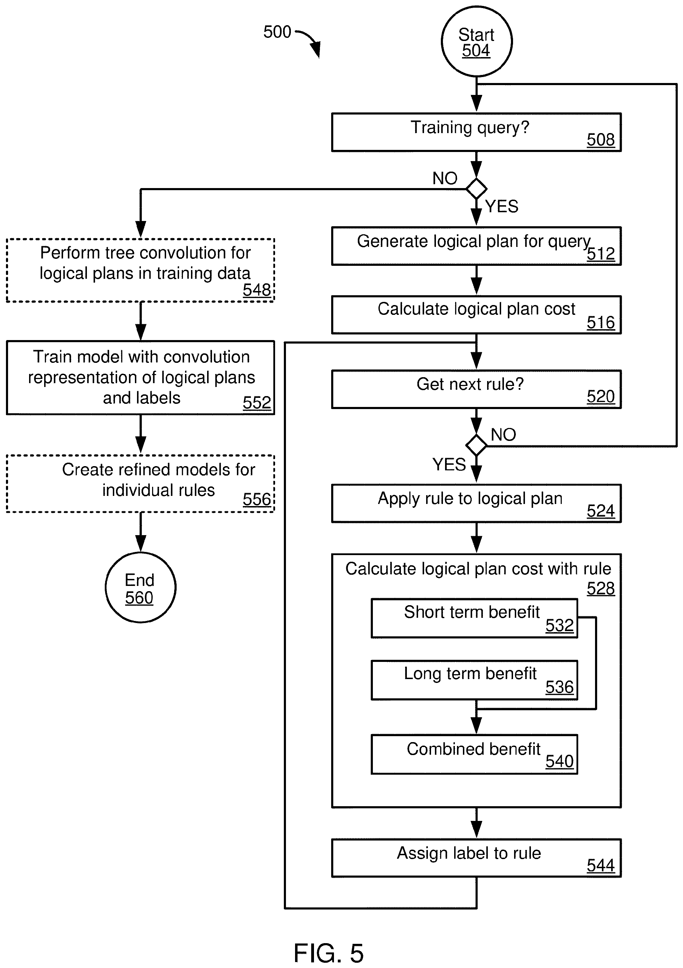

FIG. 5 provides a flowchart of a process 500 of training a model that can be used to predict whether applying rewrite rules to a query or query representation will be beneficial. The process 500 is described specifically in the context of evaluating logical plans for queries, but queries can be directly used for model training or other query representations can be used, such as abstract query plans.

The process 500 starts at 504. At 508, it is determined whether additional training queries remain to be processed. If so, at 512, a logical plan is generated for the next query of a set of training queries to be processed. A cost of the logical plan is calculated at 516, where the cost represents a "base" cost for the logical plan prior to the application of any rewrite rules.

At 520, it is determined whether more rewrite rules remain to be processed for the logical plan being evaluated. If not, the process 500 returns to 508 to determine whether additional training queries remain to be processed. If rules remain to be processed, the next rule to be evaluated is selected and is applied to the logical plan at 524. A cost is calculated for the logical plan with the rule applied at 528. The cost calculation at 528 can include calculating a short-term benefit of applying the rule at 532, a long-term benefit of applying the rule at 536, and a combined benefit of applying the rule at 540. Cost can be calculated in other manners, such as only determining a short-term cost at 532 or only determining a long-term cost. In either of those cases, the calculation of the combined cost at 540 can be omitted.

Calculating costs at 516 or 528 can be performed using suitable cost-based models or techniques. In one example, a physical query plan is generated from the logical query plan. The physical plan is executed, such as using sample data, and performance metrics are measured. The performance metrics can include elapsed time, CPU usage metrics, memory usage metrics, a number of input/output operations executed, or networking resources used. When multiple factors are present, an overall cost can be determined by combining the various resource values, which can include performing operations such as weighting or scaling values for the different metrics.

Additional cost-based models that can be used include analytical cost models, simulation-based models, and machine learning-based models. Analytical cost models use mathematical formulas to estimate the cost of query execution based on factors such as the size of the data, the complexity of the query, and the available resources. These models can provide quick and reasonably accurate cost estimates without the need for actual query execution.

Simulation-based models involve creating a detailed simulation of the query execution process, taking into account various system parameters and resource constraints. These models can provide highly accurate cost estimates but may require significant computational resources and time to run. Machine learning-based models use historical query execution data to train predictive models that can estimate the cost of new queries. These models can adapt to changes in the system and workload over time, providing accurate and up-to-date cost estimates.

In addition to these models, hybrid approaches can be employed, combining elements of analytical, simulation-based, and machine learning-based models to leverage the strengths of each approach. For example, an initial cost estimate can be generated using an analytical model, which is then refined using a machine learning model trained on historical data. This hybrid approach can provide a balance between accuracy and computational efficiency.

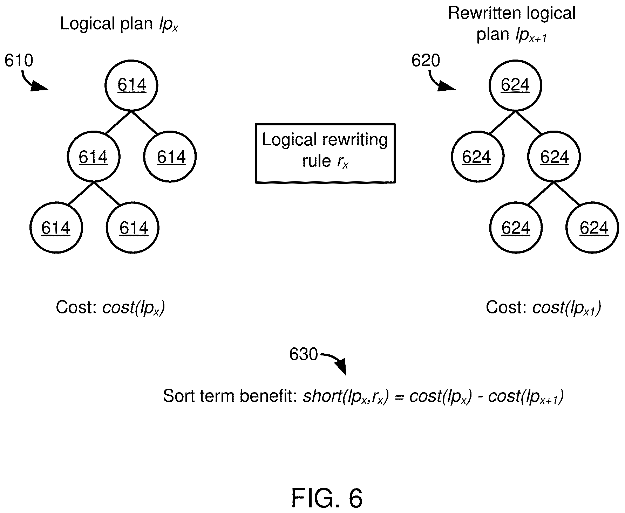

FIG. 6 illustrates the calculation of the short-term benefit of applying a logical rewrite rule $r_x$ to a logical plan $lp_x$, shown as the logical plan 610. The logical plan 610 includes a plurality of query operations 614. The application of the logical rewrite rule $r_x$ to the logical plan $lp_x$ provides a rewritten logical plan $lp_{x+1}$, shown as logical plan 620. The logical plan 620 includes a plurality of query operations 624. The query operations 624 differ from the query operations 614, either because an operation is different or because one or more operations have been reordered. The short-term benefit is calculated as shown at 630, where the cost of the rewritten logical plan is subtracted from the cost of the original logical plan, which is represented by $short(lp_x, r_x) = cost(lp_x) - cost(lp_{x+1})$. If the result is greater than zero, the rule can be considered to provide a short-term benefit.

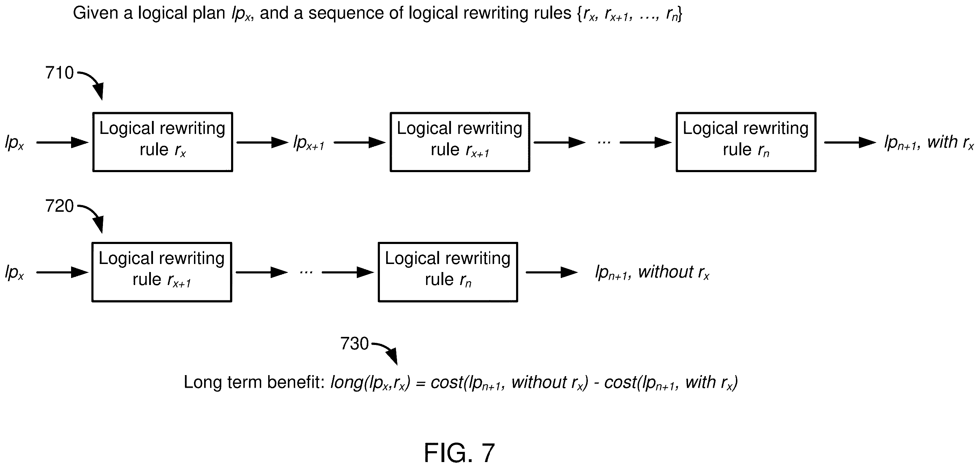

FIG. 7 illustrates the calculation of the long-term benefit. In process 710, a final query plan $lp_{n+1}$ is determined by applying a rule being evaluated, $r_x$, along with other rules in a sequence of rewrite rules. Specifically, given a logical plan $lp_x$ and a sequence of rewrite rules $\{r_x, r_{x+1}, ..., r_n\}$ where $x \leq n$, the process 710 first applies $r_x$ to $lp_x$ and obtains $lp_{x+1}$. The process 710 then applies the next rule $r_{x+1}$ to $lp_{x+1}$ and obtains $lp_{x+2}$. The process 710 obtains the final logical plan $lp_{n+1}^{with\ r_x}$ by applying $r_n$ to $lp_n$.

In process 720, a final query plan $lp_{n+1}$ is determined where rule $r_x$ is not applied, but subsequent rules in the sequence of rules are applied. Specifically, given a logical plan $lp_x$ and a sequence of rewrite rules $\{r_{x+1}, ..., r_n\}$ where $x \leq n$, the process 720 first applies $r_{x+1}$ to $lp_x$ and obtains $lp_{x+2}$. The rest of the rewrite rules are applied in the same manner as that of the process 710, and the final logical plan $lp_{n+1}^{without\ r_x}$ is obtained.

Since the application of rule $r_x$ can affect whether downstream rules can be applied, or the result of their application, the long-term benefit provides a more comprehensive analysis of benefits provided by a rewrite rule. The long-term benefit *long($lp_x$, $r_x$)* 730 is defined as $cost\left(lp_{n+1}^{without\ r_x}\right) - cost\left(lp_{n+1}^{with\ r_x}\right)$. Although the processes 710 and 720 are shown as being performed by application of all rewrite rules $\{r_{x+1}, ..., r_n\}$ subsequent to a rule $r_x$ being evaluated, in other scenarios the analysis can be performed for less than all the rules in the sequence of rules. Specifically, the long-term benefit may consider *m* rules after $r_x$, which is represented by $\{r_{x+1}, ..., r_{x+m}\}$, where $m \geq 0$. The consideration of only m rules may not exactly measure the performance impact from $r_x$, but the computational overhead to compute the long-term benefit may decrease.

Returning to FIG. 5, calculating the combined benefit from the short-term benefit and the long-term benefit can be performed according to:

$$benefit(lp_x, r_x) = \gamma\, short(lp_x, r_x) + (1 - \gamma) long(lp_x, r_x)\ (0 \leq \gamma \leq 1)$$

In the above equation, $\gamma$ serves as an adjustment factor that can be used to weight the contribution of the short-term benefit and the long-term benefit. If $\gamma$ is set to 0, the combined benefit is the same as the long-term benefit. If $\gamma$ is set to 1, the combined benefit is the same as the short-term benefit. Setting $\gamma$ to 0.5 equally weights the short-term benefit and the long-term benefit.

A label is assigned to the rule based on the combined benefit *benefit($lp_x$,$r_x$)* calculated at 528. However, in other implementations, only the long term benefit or the short term benefit is evaluated. As discussed, in some cases, a rule can be labelled as beneficial as long as the rule provides any positive benefit. In other cases, a rule can be labelled as beneficial only if it satisfies some higher threshold. Specifically, for a threshold value *T*, a rule $r_x$ is labelled as beneficial for $lp_x$ if and only if *benefit($lp_x$, $r_x$)* $\geq T$, where $T \geq 0$.

While the same threshold can be used for all rules, in some cases it can be desirable to set different thresholds for different rules. Specifically, each rule $r_x$ in the rule sequence has its own threshold value $T_{r_x}(\geq 0)$, and the rule $r_x$ is labelled as beneficial for $lp_x$ if and only if *benefit($lp_x$, $r_x$)* $\geq T_{r_x}$. For example, assume that a rule $r_x$ is regarded as beneficial because *benefit($lp_x$, $r_x$)* $\geq T$, but the application of the rule to a logical plan is computationally expensive. In this case, the overall performance for query processing may be worse. By setting a higher threshold value $T_{r_x} > T$ for the computationally expensive rule, disclosed techniques can be more discriminating about applying the rule to a logical plan.

The threshold for any particular rule can be set based on one or more of these, or other, factors. When applying $r_x$ to $lp_x$ proves to be beneficial, a label becomes *beneficial,* which is represented by a tuple ($\{lp_x, r_x\} \rightarrow$ *beneficial*). When applying $r_x$ to $lp_x$ proves to be nonbeneficial, a label becomes *nonbeneficial,* which is represented by a tuple ($\{lp_x, r_x\} \rightarrow$ *nonbeneficial*). In some cases, an attempt to apply a rule may fail, such as if the logical plan does not satisfy prerequisites for the rule (for example, a rule evaluates certain types of JOIN operations, and the logical plan does not include these operations). The cases can be treated as equivalent to a rule that was not beneficial. However, when the rule fails or cannot be applied, the benefit calculations at 528 can be omitted.

Once the label is assigned to the rule at 544, the process 500 returns to 520 to determine if additional rules remain to be evaluated for the particular logical plan being processed. If all rules have been evaluated for the logical plan, the process 500 returns to 508 to determine if additional training queries remain to be processed. If not, the process 500 proceeds to 548. Specifically, after investigating all the training queries, a set of tuples, $\{(\{lp, r\} \rightarrow label) \mid lp$ is a logical plan from a training query, $r \in \{r_1, r_x, r_x, ..., r_n\}$, *label* $\in \{beneficial, nonbeneficial\}\}$, is generated.

In a specific implementation, a machine learning model, *M($lp$, r) = label,* is trained based on the set of tuples, $\{(\{lp, r\} \rightarrow label)\}$. The machine learning model is a binary classifier where the input is a logical plan *lp* and a rewrite rule r, and the output is an element in {*beneficial, nonbeneficial*}. The model can include tree convolutional layers and fully connected layers.

A logical plan can be represented by a tree structure, where each node has a feature vector. A feature vector first describes the type of its logical operator for the node and has optional features to represent the logical operator within the predefined maximum length. For example, a projection operator is assigned 1 as the type identifier, which can be represented as a vector (1). A projection operator may include the projection columns and their corresponding tables, which can be represented as a vector (1, 0, 1, 3, 2). A selection operator is assigned 2 as the type identifier, which can be represented as a vector (2). A join operator is assigned 3 as the type identifier and may have join types (e.g., an inner join, a left outer join) as additional information, which can be represented as a vector (3, 1). After representing each node as a vector, the vectors with a length less than the maximum length are zero-padded. For the sake of brevity, each feature vector considers only its type identifier for the rest of this disclosure.

A rewrite rule is represented as a feature vector, which consists of one and zeros. Specifically, given a sequence of rewrite rules $\{r_1, r_2, ..., r_n\}$, a rewrite rule $r_i$ is represented as a vector $(0, 0, ..., 0, r_i = 1, 0, ..., 0)$, where $i^{th}$ element is one and the rest of the elements are zeros.

An output is represented as a feature vector, which consists of one or zero. Specifically, if an output is *beneficial,* the feature vector becomes (1). If an output is *nonbeneficial,* the feature vector becomes (0).

A tree convolutional layer computes convolution for a logical plan representation by moving kernels and produces a new logical plan representation. Specifically, assume that a target tree node and its children nodes are given as a set of *k* feature vectors $\{n_1, n_2, ...,n_k\}$ where $n_{i\ (1\leq i\leq k)} \in \mathbb{R}^l$, a kernel is represented as a set of *k* vectors $\{w_1, w_2,..., w_k\}$ where $w_{i\ (1\leq i\leq k)} \in \mathbb{R}^l$, a bias is represented as a vector *b* where $b \in \mathbb{R}^l$, and all the vectors have the length of *l*. A convolution for the target tree node is defined as $activation(\sum_{e=0}^{l-1}(\sum_{i=1}^{k} n_i[e] \times w_i[e]) + b[e])$, where *activation* is an activation function such as ReLU. A tree convolutional layer computes convolution for all the nodes in the logical plan representation while traversing the tree. For a leaf node without children, the node assumes that its children feature vectors are all zeros. The weight values in a kernel $\{w_1, w_2,..., w_k\}$ and a bias *b* are parameters learned and updated while training the machine learning model towards minimizing a loss function. If *c* kernels are provided instead of one kernel, after feed-forwarding the tree convolutional layer, each tree node has a feature vector of length c, instead of the initial length *l*. The value of *c* is usually called a channel. After training the tree convolutional layer, each kernel specializes in capturing specific features or patterns in logical plans that contribute to minimizing the loss function.

Tree convolution allows hierarchical structures, such as logical query plans, to be transformed into numerical feature vectors. This transformation captures the hierarchical relationships between operations in a logical query plan - such as scans, selections, and projections-while encoding them in a compact vector format that can be used for tasks like query optimization or cost estimation.

The function ReLU, or Rectified Linear Unit, is an activation function that applies an element-wise transformation to retain only positive values, setting any negative values to zero. This transformation stabilizes the feature representation by removing potentially irrelevant or negative signals from the final vector.

Consider a simplified example of a tree convolutional layer applied to a logical query plan. The logical plan consists of a projection, a join, and two table scans. The tree structure can be represented as follows:

Projection (vector representation: (0))

|

Join (vector representation: (1))

/      \

(vector representation: (2)) Scan      Scan (vector representation: (2))

Each node in the tree is assigned an initial feature vector. Each Scan node has a vector (2), representing the identifier of a scan operation. The Join node has a vector (1), reflecting the identifier of a join operator, and the Projection node has a vector (0), indicating the identifier of a projection operator.

Assume that a tree node in a logical plan has maximally two children (*k* = 3), two kernels, $\{w_1^1 = (0.1), w_2^1 = (0.2), w_3^1 = (0.1)\}$ and $\{w_1^2 = (0.5), w_2^2 = (0.4), w_3^2 = (0.5)\}$, are provided, and two bias values are given as $b^1 = 0$ and $b^2 = 0$. The tree convolutional layer first visits the Projection node. F or the Projection node, $\{n_1, n_2, ... , n_k\}$ is the same as $\{(0), (1), (0)\}$, while $n_3$ is just represented as a zero vector because the Projection operator has only one child. The tree convolutional layer computes $ReLU(\sum_{e=0}^{l-1}(\sum_{i=1}^{k} n_i[e] \times w_i[e]) + b[e])$ and obtains 0.2 for the first kernel and 0.4 for the second kernel. The feature vector of the Projection node changes from (0) to (0.2, 0.4) after applying the convolution operator.

The tree convolutional layer then visits the Join node. For the Join node, $\{n_1, n_2, n_3\}$ is equal to $\{(1), (2), (2)\}$. The tree convolutional layer computes $ReLU(\sum_{e=0}^{l-1}(\sum_{i=1}^{k} n_i[e] \times w_i[e]) + b[e])$ and obtains 0.7 for the first kernel and 2.3 for the second kernel. The feature vector of the Join node changes from (1) to (0.7, 2.3) after applying the convolution operator. After visiting the two Scan nodes, the tree changes as follows.

Projection (vector representation: (0.2, 0.4))

|

Join (vector representation: (0.7, 2.3))

/      \

(vector representation: (0.2, 1)) Scan     Scan (vector representation: (0.2, 1))

Assume that a max pooling layer is applied after the above convolutional layer. A variety of methods exist to apply max pooling, and a simple max pooling layer selects the maximum element for each node. After the simple max pooling layer, the tree changes as follows.

Projection (vector representation: (0.4))

|

Join (vector representation: (2.3))

/    \

(vector representation: (1)) Scan     Scan (vector representation: (1))

After applying the max pooling layer, assume that no more tree convolutional layers and pooling layers exist. The model traverses the tree by e.g., breadth-first search, and the final vector becomes $R_{final}$(0.4, 2.3, 1, 1) for the logical plan.

This final vector $R_{final}$ is a compact, hierarchical representation of the entire logical query plan, encoding the relationships between the projection, join, and scan operations in a single feature vector. This numerical representation of the logical plan can now serve as input for the following fully connected layers or other machine learning models, which can utilize it for predictive tasks or optimization. Through the convolutional process, the hierarchical dependencies within the logical plan are preserved, creating a detailed yet concise feature representation suitable for various computational applications.

Other techniques for converting logical plans into numerical representations include graph-based representations, sequence-based representations, and vector embeddings. Graph-based representations involve representing the logical plan as a graph, where nodes represent operations and edges represent data flow between operations. Graph Neural Networks (GNNs) can be used to process these representations, capturing complex relationships and dependencies within the graph.

Sequence-based representations treat the logical plan as a sequence of operations, similar to how sentences are represented in natural language processing. Sequence models like Recurrent Neural Networks (RNNs), Long Short-Term Memory networks (LSTMs), or Transformers can process these sequences, capturing dependencies between operations.

Vector embeddings involve converting the logical plan into a vector space using techniques like Word2Vec or Transformer-based models. These embeddings capture semantic similarities between different parts of the plan and can be processed efficiently by neural networks.

After transforming the logical plan into a feature vector, the vector is concatenated with a rewrite rule to form a single feature vector. Given a feature vector $(lp_1, lp_2, ..., lp_f)$ from tree convolutional layers and a rewrite rule $r_i$ represented as a vector $(0, 0, ..., 0, r_i = 1, 0, ..., 0)$, the concatenated vector can be defined as $(lp_1, lp_2, ..., lp_f, 0, 0, ..., 0, r_i = 1, 0, ..., 0)$. Different types of concatenation are also possible. For example, additional fully connected layers can be placed for a feature vector $(lp_1, lp_2, ..., lp_f)$ to produce another feature vector ( $lp_1', lp_2', \ldots, lp_l'$ ), additional fully connected layers can be added for a rewrite rule vector $(0, 0, ..., 0, r_i = 1, 0, ..., 0)$ to produce a new rewrite rule vector ( $r_1', r_2', \ldots, r_l'$ ), and the two new vectors are concatenated ( $lp_1', lp_2', \ldots, lp_l', r_1', r_2', \ldots, r_l'$ ).

The concatenated feature vector from a logical plan and a rewrite rule becomes an input of fully connected layers. Each fully connected layer has its own output size and activation function and comes with several optimization techniques such as batch normalization and dropout. Given a final feature value from the last fully connected layer, an activation function such as Sigmoid function is placed. Sigmoid function transforms an input value to an output value $v$ such that $0 < v < 1$. If $v > 0.5$, the output is regarded as *beneficial,* and if $v \leq 0.5$, the output is regarded as *nonbeneficial.*

The loss function such as binary cross entropy loss is set to train the model with tree convolutional layers and fully connected layers. For the training data $\{(\{lp, r\} \rightarrow label)\}$, a mini-batch of tuples is sampled from the training data, and the model is updated by stochastic gradient descent to minimize the loss from the given loss function. When the model converges, (e.g., the loss value does not decrease for a series of epochs), training the model is completed. The training phase is described at 552.

Building a separate machine learning model for each rewrite rule is also possible. The model does not take a rewrite rule as an input. The model takes only a logical plan as an input and outputs whether the logical plan is beneficial or not. This method requires a larger number of machine learning models and computational overhead to train the entire models but may provide more accurate prediction of whether the logical plan is beneficial or not.

Various types of models can be used to process the numerical representations of logical plans for tasks for determining whether rules may be beneficial if applied to a particular logical plan. In addition to neural networks, these models include decision trees, support vector machines, and ensemble methods, among others.

Neural networks are a type of machine learning model that includes layers of interconnected nodes, or neurons, where each connection has an associated weight. Neural networks can learn to recognize patterns in data through a process called backpropagation, where the model adjusts the weights based on the error of its predictions. In a specific implementation of the present disclosure, mainly two types of neural networks, tree convolutional layers and fully connected layers, are used to process logical plans and rewrite rules.

Recurrent neural networks (RNNs) are another type of neural network designed to handle sequential data. They have connections that form directed cycles, allowing them to maintain a state that can capture information from previous inputs. This makes RNNs particularly useful for tasks involving sequences, such as natural language processing or time series prediction. Variants of RNNs, such as Long Short-Term Memory networks (LSTMs) and Gated Recurrent Units (GRUs), address some of the limitations of standard RNNs by providing mechanisms to better capture long-term dependencies.

Support vector machines (SVMs) are a type of supervised learning model used for classification and regression tasks. SVMs work by finding the hyperplane that best separates the data into different classes. They are effective in high-dimensional spaces and can be used for both linear and non-linear classification through the use of kernel functions. SVMs are particularly useful when the number of features is large compared to the number of samples.

Decision trees are a type of model that splits the data into subsets based on the value of input features. Each node in the tree represents a decision based on a feature, and each branch represents the outcome of that decision. In the context of determining whether a logical plan might benefit from the application of a specific rule, decision trees can be used to model the decision-making process by evaluating various features of the logical plan and the potential impact of applying the rule. The tree structure allows for a clear and interpretable representation of the decision process, making it easy to understand which features are most influential in determining the benefit of applying a rule.

Random forests are a type of ensemble method that provides an extension of decision trees and can provide increased accuracy. A random forest includes multiple decision trees, each trained on a random subset of the data. The final prediction is obtained by aggregating the predictions of all the individual trees, typically through majority voting for classification tasks or averaging for regression tasks. This ensemble approach reduces the risk of overfitting and improves generalization. In the context of query optimization, random forests can be used to evaluate the benefit of applying a rule by considering multiple decision paths and aggregating their outcomes.

Gradient boosting machines (GBMs) are another ensemble method that builds models sequentially, where each new model attempts to correct the errors of the previous ones. GBMs are highly effective for a wide range of tasks, including classification and regression. In the context of query optimization, GBMs can be used to iteratively refine the predictions of whether applying a rule will be beneficial, by focusing on the most challenging cases and improving the model's accuracy over time.

The training at 552 results in a single model that is useable to obtain inference results for any rule in the rule set. At least for some rules, it may be desirable to create refined models for individual rules, which can be performed at 556. During inference, it can be determined whether a rule being evaluated is associated with a specific, refined model. If so, that model can be used, and the "general" model can be used otherwise. The process 500 ends at 560.

The training at 552 has been described as a single operation that performs both tree convolution to generate a representation of the logical plan and the submission of this representation to a model for training purposes, along with indicators of rules and whether they were determined to be beneficial. In other implementations, the tree convolution can be performed as a distinct operation, such as operation 548, where the representation of the logical plan produced by tree convolution, along with the labels, are submitted to the model for training at 552.

In a process of fine-tuning a general model to create specialized models for individual rules, the training data is segregated based on individual rules. For each rule, a subset of the training data is created, containing only the logical plans and labels relevant to that rule. Specifically, a subset of training data for a rewrite rule $r_i$ is defined as $\{(\{lp, r\} \rightarrow label) \mid r = r_i\}$. Each subset includes the logical plans represented by tree structures and the corresponding labels indicating the benefit of applying the specific rule.

For each rule-specific subset, the prediction accuracy of the general model is measured. If the prediction accuracy is below a threshold, a new model is initialized with the weights of the trained general model, not with randomly initialized weights. This initialization leverages shared knowledge about rules and labels captured during the initial training phase for the general model. The general model is fine-tuned using the rule-specific data to improve the prediction accuracy for the particular rule. As an optimization, the fine-tuning process can focus on only the fully connected layers while the parameters in tree convolutional layers are not updated. This optimization may provide less computational overhead to fine-tune the model and prevent overfitting problems.

Hyperparameters such as learning rate, batch size, and the number of epochs can be adjusted to optimize the fine-tuning process. Fine-tuning typically requires fewer epochs than the initial training since the model is already partially trained. A validation set can be used to monitor the performance of the fine-tuned model and to prevent overfitting. Early stopping can be employed based on validation performance.

The performance of each fine-tuned model can be evaluated using metrics such as accuracy, precision, recall, and F1-score. These metrics can be used to confirm that the fine-tuned models perform better, or at least as well, as the general model for their specific rules. Cross-validation can be used to confirm that the fine-tuned models generalize well to unseen data.

The fine-tuning process offers advantages compared to training individual models from rule-specific data from scratch. The general model learns common patterns and features across all rules, which can be beneficial for each specific rule. This shared learning helps the model generalize better, especially when there are similarities between the rules. Fine-tuning leverages the knowledge gained during the initial training phase. The model starts with a good understanding of the overall problem space, which can be refined for specific rules. Training a general model first and then fine-tuning is often faster than training multiple models from scratch. The initial training phase can be computationally intensive, but fine-tuning typically requires fewer resources and less time.

If there is limited data for certain rules, starting with a general model provides a model that has been trained with a larger dataset. Fine-tuning on smaller, rule-specific datasets can then refine this knowledge without overfitting. The general model benefits from the diversity of the entire dataset, which can help mitigate biases that might arise from training on smaller, rule-specific datasets. Using a general model also provides improved consistency in how different rules are evaluated. This fine-tuning can be performed not just for rules in the initial training, but also for newly introduced rules.

**Example 6 - Example Evaluation of Applying Rules to a Logical Plan**

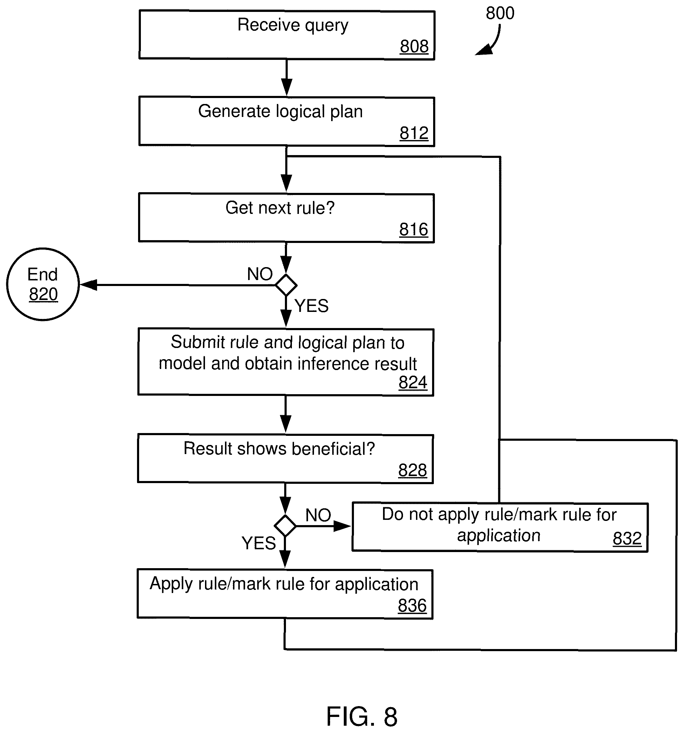

FIG. 8 illustrates a flowchart of a process 800 for obtaining a prediction as to whether a particular rewrite rule should be applied to a logical plan for a query. The process 800 can use a model, such as a neural network, obtained using the process 500 of FIG. 5.

A query is received at 808. A logical plan for the query is generated at 812. It is determined at 816 whether rules of a sequence of rules remain to be analyzed. If no rules remain to be analyzed, the process 800 ends at 820. Otherwise, the process 800 proceeds to 824.

At 824, a rule to be evaluated and the logical plan are submitted to a model, which produces an inference result, a prediction as to whether applying the rule to the logical plan will be beneficial. It is determined at 828 whether the inference result indicates that application of the rule will be beneficial. If the inference result indicates that the rule is not likely to be beneficial, the rule is not applied, or marked for application, at 832, and the process 800 returns to 816. If the inference result indicates that the rule is likely to be beneficial, at 836, the rule is applied to the logical plan or marked as to be applied to the logical plan. The process 800 can then return to 816.

**Example 7 - Example Concurrent Evaluation of Multiple Rules**

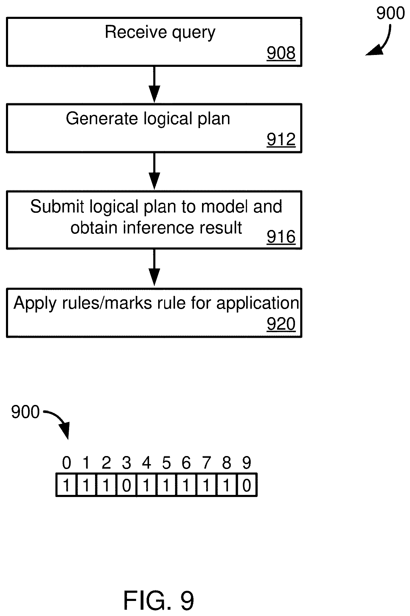

As indicated, in some cases a single inference result can include predictions for multiple rules of a sequence of rules, rather than multiple inference results being obtained, one for each rule to be evaluated. FIG. 9 provides a flowchart of a process 900 where a single inference result includes information as to whether respective rules of a sequence of multiple rules may be beneficial if applied to a logical plan being evaluated.

A query is received at 908. A logical plan for the query is generated at 912. The logical plan is submitted to the model at 916, and an inference result is obtained. Rules in the inference result that are identified as being beneficial are applied to the logical plan, or marked as to be applied to the logical plan, at 920.

FIG. 9 also illustrates an example inference result 940 obtained at 916. The example inference result 940 is in the form of a vector, where each element represents a particular rewrite rule, and where the positions of the elements in the vector determine an order in which the rules will be applied (if determined to be beneficial). The inference result 940 shows a value of 0 for elements 3 and 9, where the value of 1 is present for the remaining elements. This indicates that the rules associated with elements 3 and 9 are predicted not to be beneficial, while the remaining rules are predicted to be beneficial.

Training of a model for use with the process 900 can be performed in a similar manner as the process 500 of FIG. 5. However, during training, the logical plan and a bit vector indicating which rules were beneficial can be provided to the model.

As a different approach, given a logical plan $lp$, a rewrite rule $r_i$, and the machine learning model $M(lp, r) = label$

described in the paragraph [0086], a mini-batch of inputs is formed, $\{(lp, r_i), (lp, r_{i+1}), (lp, r_{i+2}),..., (lp, r_{i+k-1})\}$, and a set of predictaions $\{label_i, label_{i+1}, label_{i+2},..., label_{i+k-1}\}$ are obtained. This approach assumes that a logical plan does not change significantly for the following $k$ rewrite rules, and obtaining the $k$ predictions early may be the same as the predictions from $\{(lp_i, r_i), (lp_{i+1}, r_{i+1}), (lp_{i+2}, r_{i+2}),..., (l_{pi+k-1}, r_{i+k-1})\}$. This approach can save computational cost from model inference while sacrificing the accuracy of predictions.

## Example 8 - Example Condition Check Prior to Following Prediction to Not Apply Rule

In some scenarios, it may be desired to implement a process of predicting whether the application of rules will be beneficial that is weighted to an extent to applying rules, rather than not applying rules. That is, because rules are typically defined because of an expectation that they will improve query performance, and a desire to avoid performance regression, it may be desirable to implement additional checks prior to reaching a final determination of whether a rule should be applied.

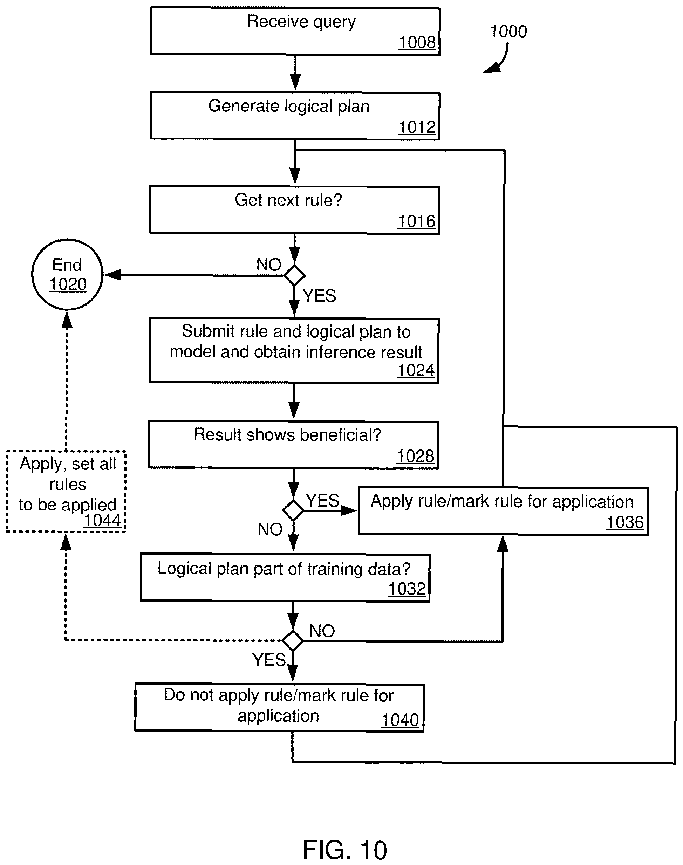

FIG. 10 is a flowchart of a process 1000 of performing an additional check prior to determining that a rule will not be applied to a logical plan being evaluated. The process 1000 is generally similar to the process 800, including where operations at 1008-1028 and 1036 correspond to operations 808-828 and 836 of FIG. 8, and will not be further described.

A difference from the process 800 occurs after 1028, where it is determined whether applying a rule to a logical plan is predicted to be beneficial. Similar to the process 800, if it is determined at 1028 that applying the rule is predicted to be beneficial, the rule is applied to the logical plan, or marked to be applied, at 1036, after which the process returns to 1016. In summary, the disclosed techniques ensure that applying a rule to a logical plan remains the default behavior. This approach reduces the likelihood of performance regression, even when the benefit prediction for applying the rule is inaccurate.

In the event it is determined at 1028 that applying the rule is not predicted to be beneficial, it is determined at 1032 whether the logical plan was part of the training data for the model used for the prediction. The decision at 1032 can be performed using the logical plan for the received query, or a representation of the logical plan, such as a vector representation of the logical plan after performing tree convolutional layers, or using the logical plan as input to a hash function, where the hash value serves as an alternative identifier for the logical plan.

The detail of the additional comparison at 1032 is as follows. After finishing training the model, all the logical plans in the training data with *nonbeneficial* labels are provided to the tree convolutional layers, which is a part of the model, and vector representations of the logical plans are obtained. It is worth noting that the rest of the model, such as fully connected layers and rewrite rules, is not considered, and only the tree convolutional layers are considered to produce a feature vector for a logical plan.

The feature vectors become a lightweight representation of the logical plans, and comparison between two feature vectors is computationally cheaper than comparison between two logical plans represented by tree structures. In addition, additional optimizations for comparison between two feature vectors are also possible such as vector indexing techniques. The feature vectors are divided into a subset of feature vectors for each rewrite rule. Given a feature vector for a logical plan, the vector is compared with feature vectors for the current rewrite rule. If the comparison fails, then the application of the rewrite rule is applied although the model predicts a nonbeneficial case. If the comparison succeeds, plan-level comparison between the two corresponding logical plans is performed, and if the subsequent comparison also succeeds, the application of the rewrite rule is safely skipped.

In some implementations, such as to reduce computational complexity, rather than searching all logical plans used in training, a top-$k$ number of logical plans for each rewrite rule can be analyzed. In particular, logical plans of training data for a rewrite rule can be sorted, such as in an ascending order of benefit provided, so the "top" logical plans are those that provide the lowest benefit. When it is to be determined whether a logical plan being analyzed was in the training data set, a top-$k$ number of logical plans can be analyzed, rather than analyzing all logical plans. If the logical plan being analyzed is not in the top-$k$ results, even though some considerations might justify following the prediction and not applying the rule, not being in the top-$k$ plans provides some indication that applying the rule provides some reasonable benefit. Restricting the search space to $k$ plans provides a bounded time complexity. Other filtering criteria can be used. For example, rather than looking at the top-$k$ least beneficial training examples, a threshold level of benefit can be set, where only logical plans which have the benefit values smaller than the threshold are searched for the logical plan being analyzed.

If it is determined at 1032 that the logical plan being evaluated was not part of training data set, the rule is applied/marked to be applied at 1036, despite the prediction indicating that applying the rule is not predicted to be beneficial. If it is determined at 1032 that the logical plan being evaluated was part of the training data set, the process 1000 does not apply the rule, or marks the rule as not to be applied, at 1040, where the process then returns to 1016.

FIG. 10 also illustrates an alternative scenario that can be implemented if it is determined at 1032 that the logical plan being evaluated is not in the training data set. That is, at 1044, the rest of the rules in the sequence of rules are applied, or marked as to be applied, to the logical plan at 1044, where the process 1000 can then end at 1020. This scenario reflects an understanding that, since the logical plan is not part of the training data set, any prediction that a rule will not be beneficial is likely to be overridden although the logical plan keeps being transformed by applying the rest of the rules, and the rule will be applied despite the prediction. This alternative implementation can save computing resource, since the process of obtaining predictions can be stopped as soon as it is recognized that all rules will be applied anyway.

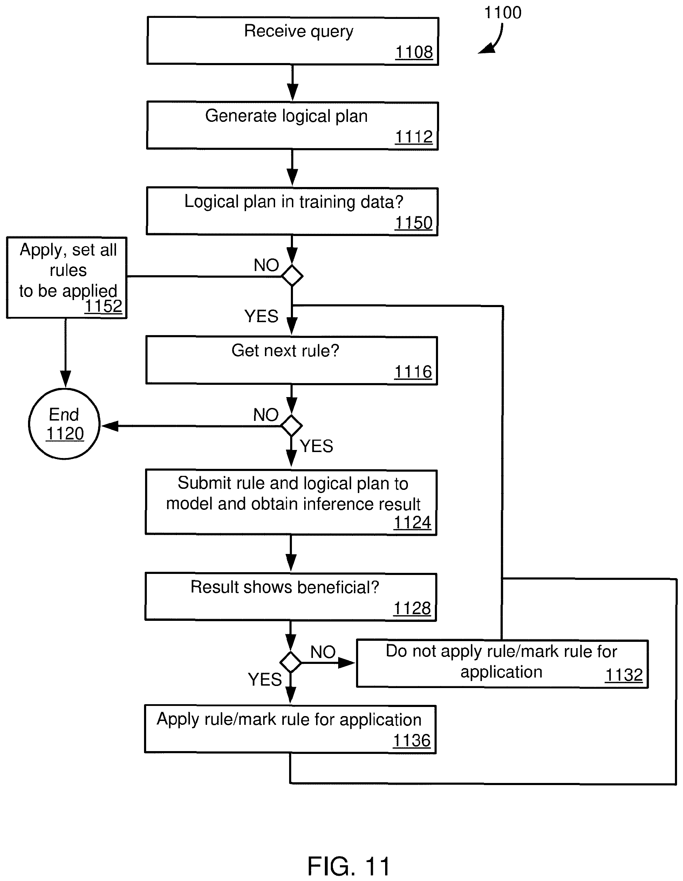

FIG. 11 provides a further alternative to FIG. 8, a process 1100, that can conserve computational resources. Operations 1108-1136 correspond to the operations 808-836 of FIG. 8, and are not further described. After generating a logical plan at 1112, it is determined at 1150 whether the logical plan being analyzed is in the set of training data. If not, all rules are applied or set to be applied, at 1152, and the process 1100 can end at 1120. Otherwise, if the logical plan is in the training data set, the process proceeds to 1116. This refinement also recognizes that a requirement that a logical plan being analyzed not being a logical plan used for training is likely to result in predictions that a rule is not beneficial, so the rule is likely to be applied anyway.

**Example 9 - Example Evaluation of Rules for Logical Plan Rewriting Using Multiple Models**

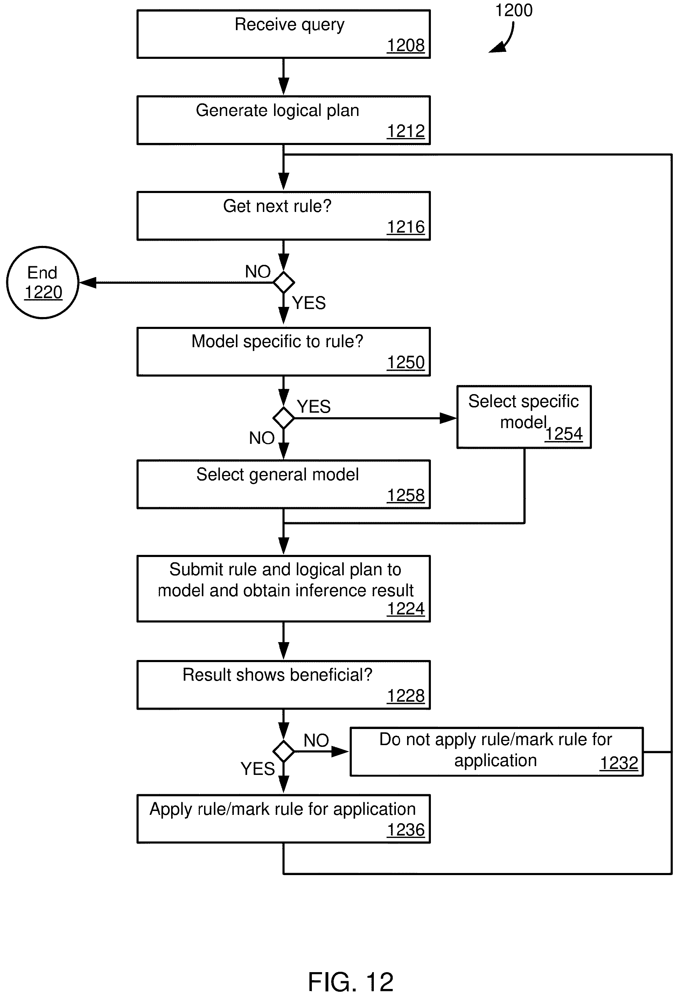

Example 5 described that an initially developed model using data for a set of rules can be used to develop models that are refined for use with particular rules. FIG. 12 provides a flowchart of a process 1200 of obtaining inference results indicating whether there is likely to be a benefit by applying particular rules to a logical plan, but considering the availability of multiple models.

The process 1200 is generally similar to the process 800 of FIG. 8. In particular, operations 1208-1236 are analogous to operations 808-836, and are not further described. After determining at 1216 that additional rules remain to be evaluated, and selecting a new rule for evaluation, it is determined at 1250 whether a model that is specific to the rule being evaluated exists. If so, that model is selected for use with the rule at 1254. Otherwise, the general model is selected at 1258. After 1254 or 1258, the process 1200 proceeds to 1224.

Various modifications can be made to the process 1200. For example, the process 1200 can be modified to include checks as to whether a logical plan being evaluated was in a training data set used for the model, including as represented in FIGS. 10 and 11.

**Example 10 - Example Computing Environment for Performing Rule Evaluation During Logical Plan Optimization**

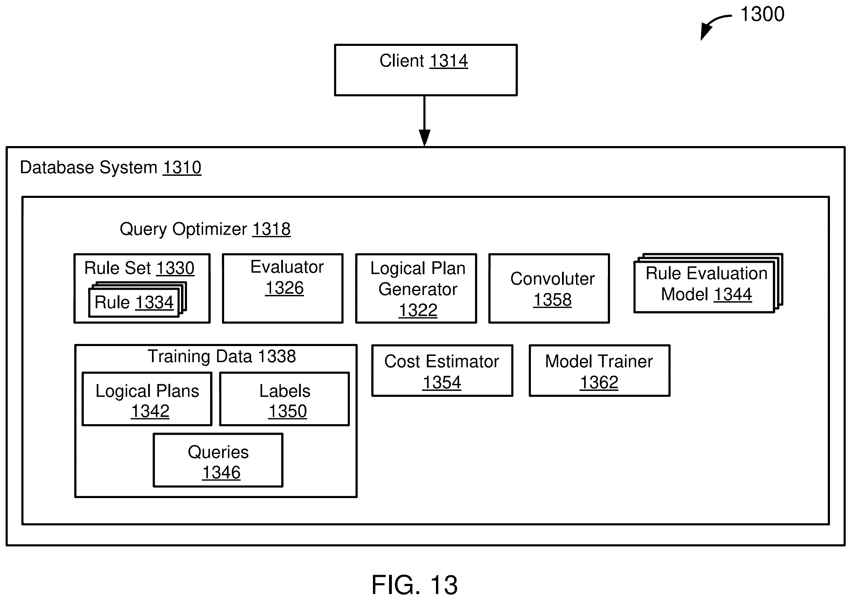

FIG. 13 is a diagram of a computing environment 1300 in which disclosed techniques can be implemented. The computing environment 1300 includes a database system 1310 and a database client 1314. The database client 1314 sends queries to the database 1310 for execution. The database 1310 can include components of the database environment 100 of FIG. 1.

The database 1310 includes a query optimizer 1318, which can be a variant of the query optimizer 132 of FIG. 1. The query optimizer 1318 includes a logical plan generator 1322. When a query is received from the database client 1314, either for execution or in preparation for execution, the logical plan generator 1322 generates a logical plan for the query. An evaluator 1326 can analyze the query prior to optimization, or as part of optimization, such as to determine whether various rules should be applied as part of optimization. The evaluator 1326 can perform described processes for performing this function including the process 500 of FIG. 5, the process 800 of FIG. 8, the process 900 of FIG. 9, the process 1000 of FIG. 10, the process 1100 of FIG. 11, or the process 1200 of FIG. 12. These processes include operations both for determining whether rules should be applied to a particular query, as well as operations for training a model to be used in such determination.

The evaluator 1326 can access one or more rule sets 1330, where each rule set includes multiple rules 1334, and where at least certain rules can be used with multiple rulesets. The rule sets 1330 typically specify an order in which rules should be applied, at least in some implementations. In other cases, rule ordering is not used, or is used, but is specified outside of a rule set 1330.

During training, the evaluator 1326 uses training data 1338 to train a rule evaluation model 1342. The training data 1338 includes logical plans 1342, which can be generated by the logical plan generator 1322 or provided from another source. Optionally, the training data 1338 can include queries 1346, where the queries can be used to produce the logical plans 1342. The training data 1338 further includes labels 1350, where the labels indicate whether particular rules 1334 provided a suitable benefit in query performance, such as a cost determined using a cost estimator 1354.

During training, a convoluter 1358 is a part of a rule evaluation model, which can be used to generate a numerical representation of a logical plan 1342. A set of training data, each of which consists of a logical plan, a rewrite rule, and a label, is provided to the rule evaluation model 1344, typically along with a corresponding label 1350 and an indication of what rule or rules 1334 gave rise to the label. Training operations can be performed using a model trainer 1362, which can, for example, be responsible for obtaining appropriate training input from the training data 1338, and determining whether the rule evaluation model 1344 performs suitably well for inference uses.

During inference, the evaluator 1326 calls the rule evaluation model 1344. The convoluter 1358 in the rule evaluation model generates a numerical representation of the logical plan for the query, such as produced by the logical plan generator 1322. The numerical representation, typically along with identifiers of one or more rules 1334, is submitted to the fully connected layers in the rule evaluation model, which provides an inference result indicating whether applying the rule to the logical plan is expected to be beneficial. If so, the rule is applied to the logical plan by the query optimizer. If not, either the rule is not applied to the logical plan, or an additional check can be performed to confirm whether the rule should be applied despite the prediction, as previously described.

**Example 11 - Example Query Optimization Using Rule Evaluation Model**

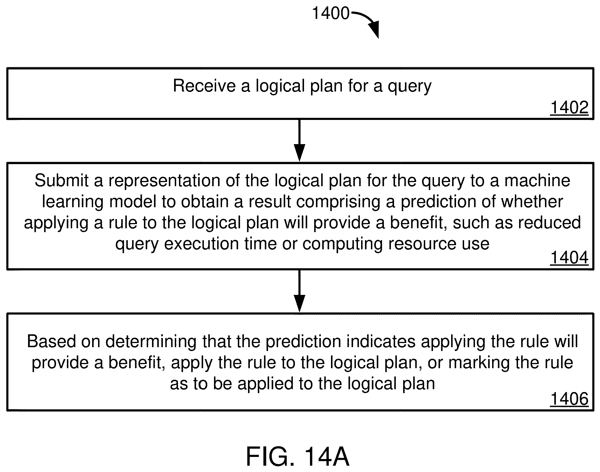

FIG. 14A is a flowchart of a process 1400 of receiving and processing a logical plan using a machine learning model. At 1402, a logical plan for a query is received. At 1404, a representation of the logical plan for the query is submitted to a machine learning model to obtain a result comprising a prediction of whether applying a rule to the logical plan will provide a benefit, such as reduced query execution time or computing resource use. At 1406, based on determining that the prediction indicates applying the rule will provide a benefit, the rule is applied to the logical plan or marked as to be applied to the logical plan.

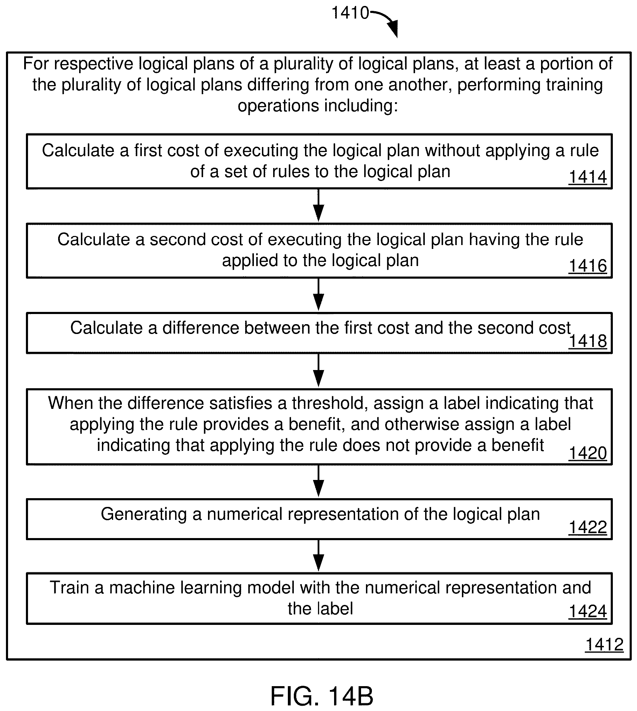

FIG. 14B is a flowchart of a process 1410 for performing training operations on logical plans and rules. At 1412, for respective logical plans of a plurality of logical plans, training operations are performed, at least a portion of the logical plans differing from one another. At 1414 a first cost of executing the logical plan without applying a rule of a set of rules to the logical plan is calculated. At 1416, a second cost of executing the logical plan having the rule applied to the logical plan is calculated. At 1418, a difference between the first cost and the second cost is calculated. At 1420, when the difference satisfies a threshold, a label is assigned indicating that applying the rule provides a benefit, and otherwise a label is assigned indicating that applying the rule does not provide a benefit. At 1422, a numerical representation of the logical plan is generated. At 1424, the machine learning model is trained with the numerical representation and the label.

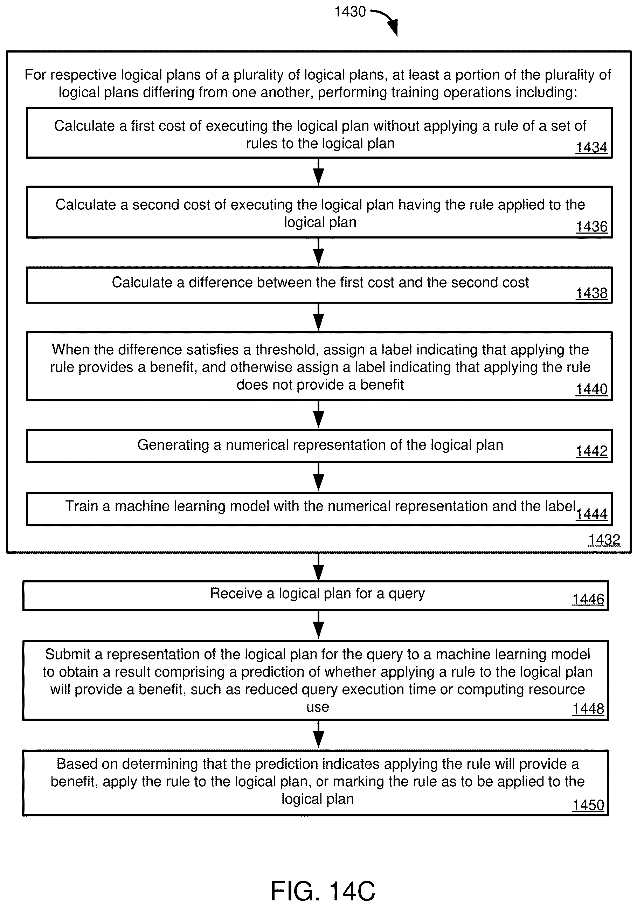

FIG. 14C is a flowchart of a process 1430 for training a machine learning model and using it to process logical plans. At 1432, for respective logical plans of a plurality of logical plans, training operations are performed, at least a portion of the logical plans differing from one another. At 1434 a first cost of executing the logical plan without applying a rule of a set of rules to the logical plan is calculated. At 1436, a second cost of executing the logical plan having the rule applied to the logical plan is calculated. At 1438, a difference between the first cost and the second cost is calculated. At 1440, when the difference satisfies a threshold, a label is assigned indicating that applying the rule provides a benefit, and otherwise a label is assigned indicating that applying the rule does not provide a benefit. At 1442, a numerical representation of the logical plan is generated. At 1444, the machine learning model is trained with the numerical representation and the label.

At 1446, a logical plan for a query is received. At 1448, a representation of the logical plan for the query is submitted to the machine learning model to obtain a result comprising a prediction of whether applying a rule to the logical plan will provide a benefit, such as reduced query execution time or computing resource use. At 1450, based on determining that the prediction indicates applying the rule will provide a benefit, the rule is applied to the logical plan, or the rule is marked as to be applied to the logical plan.

**Example 12 - Additional Examples**

Example 1 is a computing system that includes at least one memory, one or more hardware processor units coupled to the at least one memory, and one or more computer-readable storage media. The computer-readable storage media store computer-executable instructions that, when executed, cause the computing system to perform operations. The operations include receiving a logical plan for a query. A representation of the logical plan for the query is submitted to a machine learning model to obtain a result including a prediction of whether applying a rule to the logical plan will provide a benefit, such as reduced query execution time or computing resource use. Based on determining that the prediction indicates applying the rule will provide a benefit, the rule is applied to the logical plan, or the rule is marked as to be applied to the logical plan.

Example 2 is the computing system of Example 1. The prediction is a first prediction, and the rule is a first rule of a set of rules being evaluated for application to the logical plan. The operations further include receiving, from the machine learning model, a second prediction of whether applying a second rule of the set of rules to the logical plan will provide a benefit. Based on determining that the second prediction indicates that applying the second rule will not provide a benefit, the second rule is not applied to the logical plan, or the second rule is not marked as to be applied to the logical plan.

Example 3 is the computing system of Example 1. The prediction is a first prediction, and the rule is a first rule of a set of rules being evaluated for application to the logical plan. The operations further include receiving, from the machine learning model, a second prediction of whether applying a second rule of the set of rules to the logical plan will provide a benefit. Based on determining that the second prediction indicates that applying the second rule will not provide a benefit, it is determined whether the logical plan was used in training the machine learning model. Based on determining that the logical plan was not used in training the machine learning model, the second rule is applied to the logical plan, or the second rule is marked as to be applied to the logical plan.

Example 4 is the computing system of Example 1. The prediction is a first prediction, and the rule is a first rule of a set of rules being evaluated for application to the logical plan. The operations further include receiving, from the machine learning model, a second prediction of whether applying a second rule of the set of rules to the logical plan will provide a benefit. Based on determining that the second prediction indicates that applying the second rule will not provide a benefit, it is determined whether the logical plan was used in training the machine learning model. Based on determining that the logical plan was used in training the machine learning model, the second rule is not applied to the logical plan, or the second rule is not marked as to be applied to the logical plan.

Example 5 is the computing system of Example 1. The prediction is a first prediction, and the rule is a first rule of a set of rules being evaluated for application to the logical plan. The operations further include receiving, from the machine learning model, a second prediction of whether applying a second rule of the set of rules to the logical plan will provide a benefit.

Example 6 is the computing system of Example 5. The rules of the set of rules are evaluated in a specified sequence.

Example 7 is the computing system of Example 5 or Example 6. The second prediction is provided in the result.

Example 8 is the computing system of Example 5. The result is a first result, and an indication that the first rule is to be evaluated is provided to the machine learning model in a first prediction request. An indication that the second rule is to be evaluated is provided to the machine learning model in a second prediction request, and the second prediction is provided in a second result of the machine learning model in response to the second request.

Example 9 is the computing system of any of Examples 1-8. The prediction is a first prediction, the rule is a first rule of a set of rules being evaluated for application to the logical plan, and the machine learning model is a first machine learning model. The operations further include determining, in response to a request to evaluate whether a second rule of the set of rules provides a benefit, that the second rule is associated with a second machine learning model, different from the first machine learning model, and modified to provide improved accuracy for a prediction of whether the second rule will improve a logical plan. A second prediction of whether applying the second rule to the logical plan will provide a benefit is received from the second machine learning model.

Example 10 is the computing system of any of Examples 1-9. The logical plan is a first logical plan. The operations further include determining, in response to a request to evaluate whether the rule provides a benefit when applied to a second logical plan, that the second logical plan was not used in training the machine learning model. In response to determining that the logical plan was not used in training the machine learning model, the rule is applied to the second logical plan, or the rule is marked as to be applied to the second logical plan, without submitting the second logical plan to the machine learning model.

Example 11 is the computing system of any of Examples 1-10. The representation of the logical plan is a numerical representation of the logical plan.

Example 12 is a method implemented in a computing system that includes at least one hardware processor and at least one memory coupled to the at least one hardware processor. The method includes, for respective logical plans of a plurality of logical plans, at least a portion of the plurality of logical plans differing from one another, performing training operations. The training operations include calculating a first cost of executing the logical plan without applying a rule of a set of rules to the logical plan, calculating a second cost of executing the logical plan having the rule applied to the logical plan, and calculating a difference between the first cost and the second cost. When the difference satisfies a threshold, a label is assigned indicating that applying the rule provides a benefit, and otherwise a label is assigned indicating that applying the rule does not provide a benefit. A numerical representation of the logical plan is generated, and the machine learning model is trained with the numerical representation and the label.

Example 13 is the method of Example 12. Calculating the second cost includes determining a cost of applying the rule and one or more other rules in the set of rules to the logical plan.

Example 14 is the method of Example 12 or Example 13. Determining a cost of applying the rule and one or more other rules of the set of rules includes applying rules of the set of rules in a specified sequence.

Example 15 is the method of any of Examples 12-14 or 16. The method further includes assigning a label indicating that the rule does not provide a benefit when the logical plan does not satisfy a condition for applying the rule.

Example 16 is the method of any of Examples 12-15. The training operations are performed for each of a plurality of rules. The method includes performing operations to generate a machine learning model for a specified rule of the plurality of rules. The machine learning model has better performance for the specified rule than a general machine learning model trained for use with all rules of the plurality of rules.

Example 17 is the method of any of Examples 12-16. The training operations are performed for each of a plurality of rules, where training the machine learning model with the numerical representation of the logical plan and the label includes training the machine learning model with an identifier indicating that the rule is associated with the label.

Example 18 is the method of any of Examples 12-17. The difference between the first cost and the second cost indicates a short-term benefit of applying the rule of the set of rules.

Example 19 is the method of any of Examples 12-18. The difference between the first cost and the second cost further indicates a long-term benefit of applying the rule of the set of rules. The difference represents a combined benefit comprising the short-term benefit and the long-term benefit.

Example 20 is one or more computer-readable storage media. The computer-readable storage media comprise computer-executable instructions that, when executed by a computing system comprising at least one hardware processor and at least one memory coupled to the at least one hardware processor, cause the computing system to, for respective logical plans of a plurality of logical plans, at least a portion of the plurality of logical plans differing from one another, perform training operations.

The computer-executable instructions implement the training operations by causing the computing system to calculate a first cost of executing the logical plan without applying a rule of a set of rules to the logical plan, calculate a second cost of executing the logical plan having the rule applied to the logical plan, and calculate a difference between the first cost and the second cost. The instructions cause the computing system to assign a label indicating that applying the rule provides a benefit when the difference satisfies a threshold and to otherwise assign a label indicating that applying the rule does not provide a benefit. A numerical representation of the logical plan is generated, and the machine learning model is trained with the numerical representation and the label.

The instructions also cause the computing system to receive a logical plan for a query, submit a representation of the logical plan for the query to the machine learning model to obtain a result comprising a prediction of whether applying a rule to the logical plan will provide a benefit, such as reduced query execution time or computing resource use, and, based on determining that the prediction indicates applying the rule will provide a benefit, apply the rule to the logical plan or mark the rule as to be applied to the logical plan.

**Example 13 - Computing Systems**

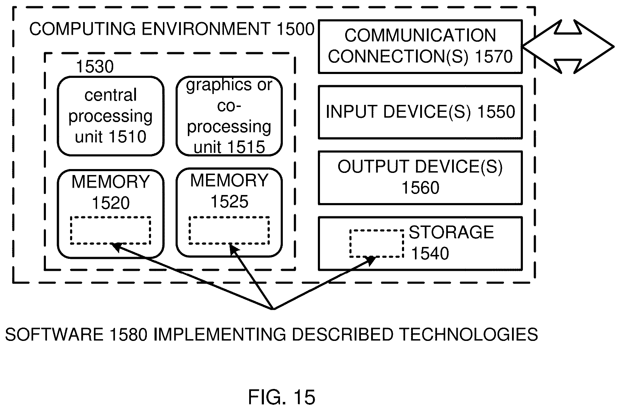

FIG. 15 depicts a generalized example of a suitable computing system 1500 in which the described innovations may be implemented. The computing system 1500 is not intended to suggest any limitation as to scope of use or functionality of the present disclosure, as the innovations may be implemented in diverse general-purpose or special-purpose computing systems.

With reference to FIG. 15, the computing system 1500 includes one or more processing units 1510, 1515 and memory 1520, 1525. In FIG. 15, this basic configuration 1530 is included within a dashed line. The processing units 1510, 1515 execute computer-executable instructions, such as for implementing a database environment, and associated methods, described in Examples 1-12. A processing unit can be a general-purpose central processing unit (CPU), a processor in an application-specific integrated circuit (ASIC), or any other type of processor. In a multi-processing system, multiple processing units execute computer-executable instructions to increase processing power. For example, FIG. 15 shows a central processing unit 1510 as well as a graphics processing unit or co-processing unit 1515. The tangible memory 1520, 1525 may be volatile memory (e.g., registers, cache, RAM), non-volatile memory (e.g., ROM, EEPROM, flash memory, etc.), or some combination of the two, accessible by the processing unit(s) 1510, 1515. The memory 1520, 1525 stores software 1580 implementing one or more innovations described herein, in the form of computer-executable instructions suitable for execution by the processing unit(s) 1510, 1515.

A computing system 1500 may have additional features. For example, the computing system 1500 includes storage 1540, one or more input devices 1550, one or more output devices 1560, and one or more communication connections 1570. An interconnection mechanism (not shown) such as a bus, controller, or network interconnects the components of the computing system 1500. Typically, operating system software (not shown) provides an operating environment for other software executing in the computing system 1500, and coordinates activities of the components of the computing system 1500.

The tangible storage 1540 may be removable or non-removable, and includes magnetic disks, magnetic tapes or cassettes, CD-ROMs, DVDs, or any other medium which can be used to store information in a non-transitory way, and which can be accessed within the computing system 1500. The storage 1540 stores instructions for the software 1580 implementing one or more innovations described herein.

The input device(s) 1550 may be a touch input device such as a keyboard, mouse, pen, or trackball, a voice input device, a scanning device, or another device that provides input to the computing system 1500. The output device(s) 1560 may be a display, printer, speaker, CD-writer, or another device that provides output from the computing system 1500.

The communication connection(s) 1570 enable communication over a communication medium to another computing entity, such as another database server. The communication medium conveys information such as computer-executable instructions, audio or video input or output, or other data in a modulated data signal. A modulated data signal is a signal that has one or more of its characteristics set or changed in such a manner as to encode information in the signal. By way of example, and not limitation, communication media can use an electrical, optical, RF, or other carrier.

The innovations can be described in the general context of computer-executable instructions, such as those included in program modules, being executed in a computing system on a target real or virtual processor. Generally, program modules or components include routines, programs, libraries, objects, classes, components, data structures, etc. that perform particular tasks or implement particular abstract data types. The functionality of the program modules may be combined or split between program modules as desired in various embodiments. Computer-executable instructions for program modules may be executed within a local or distributed computing system.

The terms "system" and "device" are used interchangeably herein. Unless the context clearly indicates otherwise, neither term implies any limitation on a type of computing system or computing device. In general, a computing system or computing device can be local or distributed, and can include any combination of special-purpose hardware and/or general-purpose hardware with software implementing the functionality described herein.

For the sake of presentation, the detailed description uses terms like "determine" and "use" to describe computer operations in a computing system. These terms are high-level abstractions for operations performed by a computer, and should not be confused with acts performed by a human being. The actual computer operations corresponding to these terms vary depending on implementation.

**Example 14 - Cloud Computing Environment**

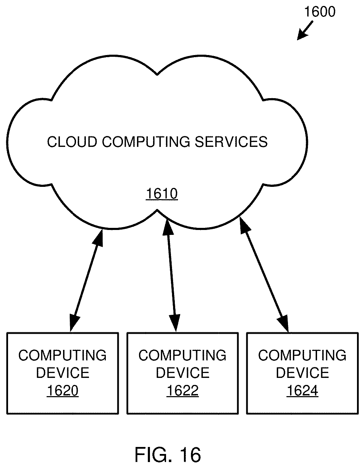

FIG. 16 depicts an example cloud computing environment 1600 in which the described technologies can be implemented. The cloud computing environment 1600 comprises cloud computing services 1610. The cloud computing services 1610 can comprise various types of cloud computing resources, such as computer servers, data storage repositories, networking resources, etc. The cloud computing services 1610 can be centrally located (e.g., provided by a data center of a business or organization) or distributed (e.g., provided by various computing resources located at different locations, such as different data centers and/or located in different cities or countries).

The cloud computing services 1610 are utilized by various types of computing devices (e.g., client computing devices), such as computing devices 1620, 1622, and 1624. For example, the computing devices (e.g., 1620, 1622, and 1624) can be computers (e.g., desktop or laptop computers), mobile devices (e.g., tablet computers or smart phones), or other types of computing devices. For example, the computing devices (e.g., 1620, 1622, and 1624) can utilize the cloud computing services 1610 to perform computing operators (e.g., data processing, data storage, and the like).

**Example 15 - Implementations**

Although the operations of some of the disclosed methods are described in a particular, sequential order for convenient presentation, it should be understood that this manner of description encompasses rearrangement, unless a particular ordering is required by specific language set forth herein. For example, operations described sequentially may in some cases be rearranged or performed concurrently. Moreover, for the sake of simplicity, the attached figures may not show the various ways in which the disclosed methods can be used in conjunction with other methods.

Any of the disclosed methods can be implemented as computer-executable instructions or a computer program product stored on one or more computer-readable storage media, such as tangible, non-transitory computer-readable storage media, and executed on a computing device (e.g., any available computing device, including smart phones or other mobile devices that include computing hardware). Tangible computer-readable storage media are any available tangible media that can be accessed within a computing environment (e.g., one or more optical media discs such as DVD or CD, volatile memory components (such as DRAM or SRAM), or nonvolatile memory components (such as flash memory or hard drives)). By way of example and with reference to FIG. 15, computer-readable storage media include memory 1520 and 1525, and storage 1540. The term computer-readable storage media does not include signals and carrier waves. In addition, the term computer-readable storage media does not include communication connections (e.g., 1570).

Any of the computer-executable instructions for implementing the disclosed techniques, as well as any data created and used during implementation of the disclosed embodiments, can be stored on one or more computer-readable storage media. The computer-executable instructions can be part of, for example, a dedicated software application or a software application that is accessed or downloaded via a web browser or other software application (such as a remote computing application). Such software can be executed, for example, on a single local computer (e.g., any suitable commercially available computer) or in a network environment (e.g., via the Internet, a wide-area network, a local-area network, a client-server network (such as a cloud computing network), or other such network) using one or more network computers.

For clarity, only certain selected aspects of the software-based implementations are described. Other details that are well known in the art are omitted. For example, it should be understood that the disclosed technology is not limited to any specific computer language or program. For instance, the disclosed technology can be implemented by software written in C++, Java, Perl, JavaScript, Python, Ruby, ABAP, Structured Query Language, Adobe Flash, or any other suitable programming language, or, in some examples, markup languages such as html or XML, or combinations of suitable programming languages and markup languages. Likewise, the disclosed technology is not limited to any particular computer or type of hardware. Certain details of suitable computers and hardware are well known and need not be set forth in detail in this disclosure.

Furthermore, any of the software-based embodiments (comprising, for example, computer-executable instructions for causing a computer to perform any of the disclosed methods) can be uploaded, downloaded, or remotely accessed through a suitable communication means. Such suitable communication means include, for example, the Internet, the World Wide Web, an intranet, software applications, cable (including fiber optic cable), magnetic communications, electromagnetic communications (including RF, microwave, and infrared communications), electronic communications, or other such communication means.

The disclosed methods, apparatus, and systems should not be construed as limiting in any way. Instead, the present disclosure is directed toward all novel and nonobvious features and aspects of the various disclosed embodiments, alone and in various combinations and sub combinations with one another. The disclosed methods, apparatus, and systems are not limited to any specific aspect or feature or combination thereof, nor do the disclosed embodiments require that any one or more specific advantages be present, or problems be solved.

The technologies from any example can be combined with the technologies described in any one or more of the other examples. In view of the many possible embodiments to which the principles of the disclosed technology may be applied, it should be recognized that the illustrated embodiments are examples of the disclosed technology and should not be taken as a limitation on the scope of the disclosed technology. Rather, the scope of the disclosed technology includes what is covered by the scope and spirit of the following claims.

**Claims**

1. A computing system comprising:

   at least one memory;
   one or more hardware processor units coupled to the at least one memory; and
   one or more computer readable storage media storing computer-executable instructions that, when executed, cause the computing system to perform operations comprising:

   receiving a logical plan for a query;
   submitting a representation of the logical plan for the query to a machine learning model to obtain a result comprising a prediction of whether applying a rule to the logical plan will provide a benefit, such as reduced query execution time or computing resource use; and
   based on determining that the prediction indicates applying the rule will provide a benefit, applying the rule to the logical plan, or marking the rule as to be applied to the logical plan.

2. The computing system of claim 1, wherein the prediction is a first prediction and the rule is a first rule of a set of rules being evaluated for application to the logical plan, the operations further comprising:

   from the machine learning model, receiving a second prediction of whether applying a second rule of the set of rules to the logical plan will provide a benefit; and
   based on determining that the second prediction indicates that applying the rule will not provide a benefit, not applying the rule to the logical plan or not marking the rule as to be applied to the logical plan.

3. The computing system of claim 1 or 2, wherein the prediction is a first prediction and the rule is a first rule of a set of rules being evaluated for application to the logical plan, the operations further comprising:

   from the machine learning model, receiving a second prediction of whether applying a second rule of the set of rules to the logical plan will provide a benefit;
   based on determining that the second prediction indicates that applying the rule will not provide a benefit, determining whether the logical plan was used in training the machine learning model; and
   based on determining that the logical plan was not used in training the machine learning model, applying the rule to the logical plan or marking the rule as to be applied to the logical plan.

4. The computing system of any one of the preceding claims, wherein the prediction is a first prediction and the rule is a first rule of a set of rules being evaluated for application to the logical plan, the operations further comprising:

   from the machine learning model, receiving a second prediction of whether applying a second rule of the set of rules to the logical plan will provide a benefit;

based on determining that the second prediction indicates that applying the rule will not provide a benefit, determining whether the logical plan was used in training the machine learning model; and

based on determining that the logical plan was used in training the machine learning model, not applying the rule to the logical plan or not marking the rule as to be applied to the logical plan.

5. The computing system of any one of the preceding claims, wherein the prediction is a first prediction and the rule is a first rule of a set of rules being evaluated for application to the logical plan, the operations further comprising:

from the machine learning model, receiving a second prediction of whether applying a second rule of the set of rules to the logical plan will provide a benefit;

wherein rules of the set of rules may be evaluated in a specified sequence, and/or

the second prediction may be provided in the result.

6. The computing system of claim 5, wherein the result is a first result and an indication that the first rule is to be evaluated is provided to the machine learning model in a first prediction request and an indication that the second rule is to be evaluated is provided to the machine learning model in a second prediction request and the second prediction is provided in a second result of the machine learning model in response to the second request.

7. The computing system of any one of the preceding claims, wherein the prediction is a first prediction, the rule is a first rule of a set of rules being evaluated for application to the logical plan, and the machine learning model is a first machine learning model, the operations further comprising:

in response to a request to evaluate whether a second rule of the set of rules provides a benefit, determining that the second rule is associated with a second machine learning model, different from the first machine learning model, and modified to provide improved accuracy for a prediction of whether the second rule will improve a logical plan; and

from the second machine learning model, receiving a second prediction of whether applying a second rule of the set of rules to the logical plan will provide a benefit.

8. The computing system of any one of the preceding claims, wherein the logical plan is a first logical plan, the operations further comprising:

in response to a request to evaluate whether the rule provides a benefit when applied to a second logical plan, determining that the second logical plan was not used in training the machine learning model; and

in response to determining that the logical plan was not used in training the machine learning model, applying the rule to the second logical plan, or marking the rule as to be applied to the second logical plan, without submitting the second logical plan to the machine learning model;

wherein the representation of the logical plan may be a numerical representation of the logical plan.

9. A method, implemented in a computing system comprising at least one hardware processor and at least one memory coupled to the at least one hardware processor, the method comprising:

for respective logical plans of a plurality of logical plans, at least a portion of the plurality of logical plans differing from one another, performing training operations comprising:

calculating a first cost of executing the logical plan without applying a rule of a set of rules to the logical plan;

calculating a second cost of executing the logical plan having the rule applied to the logical plan;

calculating a difference between the first cost and the second cost;

when the difference satisfies a threshold, assigning a label indicating that applying the rule provides a benefit, and otherwise assigning a label indicating that applying the rule does not provide a benefit;

generating a numerical representation of the logical plan; and

training a machine learning model with the numerical representation and the label.

10. The method of claim 9, wherein calculating the second cost comprises determining a cost of applying the rule and one or more other rules in a set of rules to the logical plan;

wherein determining a cost of applying the rule and one or more other rules of the set of rules may comprise applying rules of the set of rules in a specified sequence.

**11.** The method of claim 9 or 10, further comprising:
assigning a label indicating that the rule does not provide a benefit when the logical plan does not satisfy a condition for applying the rule.

**12.** The method of claim any one of claims 9 to 11, wherein the training operations are performed for each of a plurality of rules, the method comprising:
performing operations to generate a neural network model for a specified rule of the plurality of rules, the neural network model having better performance for the specified rule than a general machine learning model trained for use with all rules of the plurality of rules.

**13.** The method of any one of claims 9 to 12, wherein the training operations are performed for each of a plurality of rules, wherein training the machine learning model with the numerical representation of the logical plan and the label includes training the machine learning model with an identifier indicating that the rule is associated with the label.

**14.** The method of any one of claims 9 to 13, wherein the difference between the first cost and the second cost indicates a short-term benefit of applying the rule of the set of rules;
wherein the difference between the first cost and the second cost may further indicate a long-term benefit of applying the rule of the set of rules, the difference representing a combined benefit comprising the short-term benefit and the long-term benefit.

**15.** One or more computer-readable storage media comprising:

computer-executable instructions that, when executed by a computing system comprising at least one hardware processor and at least one memory coupled to the at least one hardware processor, cause the computing system to, for respective logical plans of a plurality of logical plans, at least a portion of the plurality of logical plans differing from one another, perform training operations, the computer-executable instructions implementing the training operations comprising:

computer-executable instructions that, when executed by the computing system, cause the computing system to calculate a first cost of executing the logical plan without applying a rule of a set of rules to the logical plan;
computer-executable instructions that, when executed by the computing system, cause the computing system to calculate a second cost of executing the logical plan having the rule applied to the logical plan;
computer-executable instructions that, when executed by the computing system, cause the computing system to calculate a difference between the first cost and the second cost;
computer-executable instructions that, when executed by the computing system, cause the computing system to, when the difference satisfies a threshold, assign a label indicating that applying the rule provides a benefit, and otherwise assigning a label indicating that applying the rule does not provide a benefit;
computer-executable instructions that, when executed by the computing system, cause the computing system to generate a numerical representation of the logical plan; and
computer-executable instructions that, when executed by the computing system, cause the computing system to train a machine learning model with the numerical representation and the label;

computer-executable instructions that, when executed by the computing system, cause the computing system to receive a logical plan for a query;
computer-executable instructions that, when executed by the computing system, cause the computing system to submit a representation of the logical plan for the query to the machine learning model to obtain a result comprising a prediction of whether applying a rule to the logical plan will provide a benefit, such as reduced query execution time or computing resource use; and
computer-executable instructions that, when executed by the computing system, cause the computing system to, based on determining that the prediction indicates applying the rule will provide a benefit, apply the rule to the logical plan, or mark the rule as to be applied to the logical plan.

FIG. 1

200

Database System 206

Query 204 → Plan Cache Manager 208 → Parser 212 → Query Optimizer 216 → Plan Generator 220 → Query Executor 224

FIG. 2

304 → 

```
SELECT c.name, o.order_id
FROM customers c
JOIN orders o ON c.customer_id
= o.customer_id
WHERE o.total_amount > 100;
```

Scan table 'customers' and refer to it as 'c'

312 →

Scan table `customers` with metadata info [estimated rows: 1 million, average row size: 100 bytes] and refer to it as `c`

Scan table orders and refer to it as 'o'

322 →

Scan table `orders` with metadata info [estimated rows: 5 million, average row size: 150 bytes, indexed columns: {customer_id, total_amount}] and refer to it as `o`

Join 'c' and 'o' on the condition 'c.customer_id' = 'o.customer_id'

Join `c` and `o` on the condition `c.customer_id = o.customer_id` with potential join strategy hints [consider: hash join, avoid: nested loop join given row estimates]

Filter rows where 'o.total_amount '> 100

Filter rows where `o.total_amount > 100` [index on total_amount exists]

Project columns 'c.name' and 'o.order_id'

Project columns `c.name` and `o.order_id`

FIG. 3A

EP 4 756 638 A1

# FIG. 3B

**332**

```
Table scan `customers` using sequential scan and
refer to it as `c`
```

↓

```
Table scan `orders` using index scan on
`total_amount` to pre-filter rows where
`total_amount > 100`, and refer to the result as `o`
```

↓

```
Apply a hash join on `c` and `o` using `customer_id`
as the join key. Store the result in memory
```

↓

```
Extract and project columns `c.name` and `o.order_id`
from the in-memory result
```

↓

```
Send the final result to the requesting client/
application
```

**342**

```
**Allocate Memory**: Allocate memory buffers for
`customers` and `orders` table scans
```

↓

```
**Parallel Scan**: In parallel, perform:
- **a.** Sequential table scan on `customers` and
load relevant rows into the memory buffer. Label the
result as `c`
- **b.** Use the `total_amount` B-tree index to scan
`orders`, filtering rows with `total_amount > 100`.
Load these rows into a separate memory buffer.
Label the result as `o`
```

↓

```
**Hash Join Preparation**: Build a hash table in
memory using `customer_id` from the `c` buffer
```

↓

```
**Projection**: Extract and project the columns
`c.name` and `o.order_id` from the join result
```

↓

```
**Output Handling**: Stream the final result set to
the client/application through the database's network
interface, potentially using a cursor for large result
sets
```

↓

```
**Clean-Up**: Release all memory buffers and any
other temporary resources used during the query
execution
```

EP 4 756 638 A1

```
SELECT c.name, SUM(o.amount)
FROM customers c
JOIN orders o ON c.id = o.customer_id
JOIN products p ON o.product_id = p.id
WHERE p.category = 'Electronics'
GROUP BY c.name
HAVING SUM(o.amount) > 500;          404
```

420

| Scan `customers` table |
| --- |
| ↓ |
| Scan `orders` table |
| ↓ |
| Scan `products` table |
| ↓ |
| Join `customers` with `orders` on `customer_id` |
| ↓ |
| Join the result with `products` on `product_id` |
| ↓ |
| Filter results where `products.category = 'Electronics'` |
| ↓ |
| Group results by `customer.name` |
| ↓ |
| Filter groups where 'SUM(o.amount) > 500' |
| ↓ |
| Project `customer.name` and `SUM(o.amount)` |

440

| Scan `customers` table - Annotation: Table size: 10,000 rows, Indexed columns: `id` |
| --- |
| ↓ |
| Scan `orders` table - Annotation: Table size: 100,000 rows, Indexed columns: `customer_id, product_id`, Cardinality estimate for `customer_id join`: 10:1 |
| ↓ |
| Scan `products` table - Annotation: Table size: 1,000 rows, Indexed columns: `id`, 50% rows with `category = 'Electronics'` |
| ↓ |
| Join `customers` with `orders` on `customer_id` - Placeholder: Choice of join method (Hash join / Nested loop) |
| ↓ |
| Join the result with `products` on `product_id` - Placeholder: Choice of join method |
| ↓ |
| Filter results where `products.category = 'Electronics'` - Annotation: Estimated 50,000 rows post-filter |
| ↓ |
| Group results by `customer.name` - Annotation: Estimated 9,000 groups |
| ↓ |
| Filter groups where 'SUM(o.amount) > 500' - Annotation: Estimated 7,000 groups post-filter |
| ↓ |
| Project `customer.name` and `SUM(o.amount)` |

FIG. 4

500

Start
504

Training query?                    508

NO ◇ YES

Generate logical plan for query
512

Perform tree convolution for
logical plans in training data
548

Calculate logical plan cost
516

Train model with convolution
representation of logical plans
and labels            552

Get next rule?                    520

NO

YES

Create refined models for
individual rules      556

Apply rule to logical plan
524

Calculate logical plan cost with rule
528

End
560

Short term benefit
532

Long term benefit
536

Combined benefit
540

Assign label to rule
544

FIG. 5

Logical plan $lp_x$

Rewritten logical plan $lp_{x+1}$

610

614

614    614

614    614

Logical rewriting rule $r_x$

620

624

624    624

624    624

Cost: $cost(lp_x)$

Cost: $cost(lp_{x1})$

630

Sort term benefit: $short(lp_x, r_x) = cost(lp_x) - cost(lp_{x+1})$

FIG. 6

EP 4 756 638 A1

Given a logical plan $lp_x$, and a sequence of logical rewriting rules $\{r_x, r_{x+1}, ..., r_n\}$

710

$lp_x \rightarrow$ Logical rewriting rule $r_x$ $\rightarrow lp_{x+1} \rightarrow$ Logical rewriting rule $r_{x+1}$ $\rightarrow ... \rightarrow$ Logical rewriting rule $r_n$ $\rightarrow lp_{n+1}$, with $r_x$

720

$lp_x \rightarrow$ Logical rewriting rule $r_{x+1}$ $\rightarrow ... \rightarrow$ Logical rewriting rule $r_n$ $\rightarrow lp_{n+1}$, without $r_x$

730

Long term benefit: $long(lp_x, r_x) = cost(lp_{n+1}, without\ r_x) - cost(lp_{n+1}, with\ r_x)$

FIG. 7

800

Receive query
808

Generate logical plan
812

Get next rule?
816

End
820

NO

YES

Submit rule and logical plan to
model and obtain inference result
824

Result shows beneficial?
828

NO

Do not apply rule/mark rule for
application          832

YES

Apply rule/mark rule for application
836

FIG. 8

900

Receive query

908

Generate logical plan

912

Submit logical plan to model and
obtain inference result   916

Apply rules/marks rule for application

920

900

| 0 | 1 | 2 | 3 | 4 | 5 | 6 | 7 | 8 | 9 |
|---|---|---|---|---|---|---|---|---|---|
| 1 | 1 | 1 | 0 | 1 | 1 | 1 | 1 | 1 | 0 |

FIG. 9

Receive query
1008

Generate logical plan
1012

Get next rule?
1016

NO → End 1020

YES

Submit rule and logical plan to model and obtain inference result
1024

Result shows beneficial?
1028

YES → Apply rule/mark rule for application
1036

NO

Logical plan part of training data?
1032

Apply, set all rules to be applied
1044

NO

YES

Do not apply rule/mark rule for application
1040

1000

FIG. 10

1100

```
┌─────────────────────────────┐
│  Receive query              │
│                    1108     │
└─────────────────────────────┘
              │
              ▼
┌─────────────────────────────┐
│  Generate logical plan      │
│                    1112     │
└─────────────────────────────┘
              │
              ▼
┌─────────────────────────────┐
│  Logical plan in training data? │
│                    1150     │
└─────────────────────────────┘
              │
             NO
              ◇
              │
             YES
              ▼
```

┌──────────────────┐
│ Apply, set all   │
│ rules            │
│ to be applied    │
│              1152 │
└──────────────────┘

```
┌─────────────────────────────┐
│  Get next rule?             │
│                    1116     │
└─────────────────────────────┘
              │
             NO
              ◇ ──────→  End
              │          1120
             YES
              ▼
┌─────────────────────────────┐
│  Submit rule and logical plan to │
│  model and obtain inference result │
│                    1124     │
└─────────────────────────────┘
              │
              ▼
┌─────────────────────────────┐
│  Result shows beneficial?   │
│                    1128     │
└─────────────────────────────┘
              │
              ◇ ── NO ──→ ┌──────────────────────────────┐
              │           │ Do not apply rule/mark rule for │
             YES          │ application            1132  │
              ▼           └──────────────────────────────┘
┌─────────────────────────────┐
│  Apply rule/mark rule for application │
│                    1136     │
└─────────────────────────────┘
```

FIG. 11

1200

```
┌─────────────────────────────┐
│       Receive query         │
│                        1208 │
└─────────────────────────────┘
              │
              ▼
┌─────────────────────────────┐
│     Generate logical plan   │
│                        1212 │
└─────────────────────────────┘
              │
              ▼
┌─────────────────────────────┐
│       Get next rule?        │
│                        1216 │
└─────────────────────────────┘
              │
        NO ◇ 1220 → End
           YES
              ▼
┌─────────────────────────────┐
│     Model specific to rule? │
│                        1250 │
└─────────────────────────────┘
              │
        ◇ YES → ┌──────────────────┐
        NO      │  Select specific │
              │ │    model    1254 │
              ▼ └──────────────────┘
┌─────────────────────────────┐
│     Select general model    │
│                        1258 │
└─────────────────────────────┘
              │
              ▼
┌─────────────────────────────┐
│  Submit rule and logical    │
│  plan to model and obtain   │
│  inference result      1224 │
└─────────────────────────────┘
              │
              ▼
┌─────────────────────────────┐
│   Result shows beneficial?  │
│                        1228 │
└─────────────────────────────┘
              │
        ◇ NO → ┌─────────────────────────────────┐
        YES    │ Do not apply rule/mark rule for │
              ▼│ application               1232  │
┌─────────────────────────────┐ └───────────────────────────────┘
│ Apply rule/mark rule for    │
│ application            1236 │
└─────────────────────────────┘
```

FIG. 12

EP 4 756 638 A1

FIG. 13

1400

| Receive a logical plan for a query |
| :--- |
| 1402 |

| Submit a representation of the logical plan for the query to a machine learning model to obtain a result comprising a prediction of whether applying a rule to the logical plan will provide a benefit, such as reduced query execution time or computing resource use |
| :--- |
| 1404 |

| Based on determining that the prediction indicates applying the rule will provide a benefit, apply the rule to the logical plan, or marking the rule as to be applied to the logical plan |
| :--- |
| 1406 |

## FIG. 14A

1410

For respective logical plans of a plurality of logical plans, at least a portion of the plurality of logical plans differing from one another, performing training operations including:

Calculate a first cost of executing the logical plan without applying a rule of a set of rules to the logical plan 1414

Calculate a second cost of executing the logical plan having the rule applied to the logical plan 1416

Calculate a difference between the first cost and the second cost 1418

When the difference satisfies a threshold, assign a label indicating that applying the rule provides a benefit, and otherwise assign a label indicating that applying the rule does not provide a benefit 1420

Generating a numerical representation of the logical plan 1422

Train a machine learning model with the numerical representation and the label 1424

1412

FIG. 14B

1430

For respective logical plans of a plurality of logical plans, at least a portion of the plurality of logical plans differing from one another, performing training operations including:

> Calculate a first cost of executing the logical plan without applying a rule of a set of rules to the logical plan  1434

> Calculate a second cost of executing the logical plan having the rule applied to the logical plan  1436

> Calculate a difference between the first cost and the second cost  1438

> When the difference satisfies a threshold, assign a label indicating that applying the rule provides a benefit, and otherwise assign a label indicating that applying the rule does not provide a benefit  1440

> Generating a numerical representation of the logical plan  1442

> Train a machine learning model with the numerical representation and the label 1444

1432

Receive a logical plan for a query  1446

Submit a representation of the logical plan for the query to a machine learning model to obtain a result comprising a prediction of whether applying a rule to the logical plan will provide a benefit, such as reduced query execution time or computing resource use  1448

Based on determining that the prediction indicates applying the rule will provide a benefit, apply the rule to the logical plan, or marking the rule as to be applied to the logical plan  1450

FIG. 14C

COMPUTING ENVIRONMENT 1500

COMMUNICATION CONNECTION(S) 1570

1530

central processing unit 1510

graphics or co-processing unit 1515

INPUT DEVICE(S) 1550

OUTPUT DEVICE(S) 1560

MEMORY 1520

MEMORY 1525

STORAGE 1540

SOFTWARE 1580 IMPLEMENTING DESCRIBED TECHNOLOGIES

FIG. 15

1600

CLOUD COMPUTING SERVICES

1610

COMPUTING
DEVICE
1620

COMPUTING
DEVICE
1622

COMPUTING
DEVICE
1624

FIG. 16

Europäisches
Patentamt
European
Patent Office
Office européen
des brevets

# EUROPEAN SEARCH REPORT

**Application Number**

EP 25 21 0873

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 115 705 322 A (HUAWEI TECH CO LTD; UNIV TSINGHUA) 17 February 2023 (2023-02-17) * abstract * * paragraph [0067] * * paragraph [0138] - paragraph [0192]; figures 1-4 * | 1-15 | INV. G06F16/2453 |

-----

**TECHNICAL FIELDS SEARCHED (IPC)**

G06F

The present search report has been drawn up for all claims

| Place of search | Date of completion of the search | Examiner |
|---|---|---|
| Berlin | 6 February 2026 | Barieux, Marc |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 21 0873

This annex lists the patent family members relating to the patent documents cited in the above-mentioned European search report.
The members are as contained in the European Patent Office EDP file on
The European Patent Office is in no way liable for these particulars which are merely given for the purpose of information.

06-02-2026

| Patent document cited in search report | Publication date | Patent family member(s) | | Publication date |
|---|---|---|---|---|
| CN 115705322 A | 17-02-2023 | CN | 115705322 A | 17-02-2023 |
| | | WO | 2023016537 A1 | 16-02-2023 |

EPO FORM P0459